# EUROPÄISCHE PATENTSCHRIFT

(11) **EP 3 550 139 B1**
(45) Veröffentlichungstag und Bekanntmachung des Hinweises auf die Patenterteilung: **19.08.2020**
(21) Anmeldenummer: 19163027.6
(22) Anmeldetag: 15.03.2019
(51) Int. Cl.: B23P 19/06, B25B 29/02, F03D 13/10, F03D 13/20, E04H 12/08

(54) **VORRICHTUNG ZUM ANZIEHEN VON SCHRAUBVERBINDUNGEN**
DEVICE FOR TIGHTENING SCREW JOINTS
DISPOSITIF DE SERRAGE DE RACCORDS VISSÉS

(30) Priorität: 29.03.2018 DE 102018107653
(43) Veröffentlichungstag der Anmeldung: 09.10.2019
(73) Patentinhaber: Hohmann, Frank, 59581 Warstein (DE); Hohmann, Jörg, 59872 Meschede (DE)
(72) Erfinder:
(74) Vertreter: Christophersen Patentanwälte

(56) Entgegenhaltungen:
- EP-A1- 2 607 685
- EP-A1- 3 195 991
- CN-A- 107 538 210
- US-A1- 2013 185 932

## Beschreibung

Die Erfindung betrifft eine Vorrichtung zum Anziehen von Schraubverbindungen, die entlang einer einen Raum und vorzugsweise das Innere des Turms einer Windkraftanlage in Ringform umgebenden Flanschverbindung angeordnet sind und von denen sich jede Schraubverbindung aus einem Gewindeelement und einer darauf aufgeschraubten Mutter zusammensetzt, und die Mutter gegen die Flanschverbindung abgestützt ist, wobei die Vorrichtung aufweist
- einen entlang der Flanschverbindung fahrbaren, mit einem vorzugsweise elektrischen Fahrantrieb versehenen Werkzeugträger,
- ein an dem Werkzeugträger angeordnetes Werkzeug zum Anziehen der Schraubverbindung und Drehen der Mutter relativ zu der Flanschverbindung,
- eine Steuereinheit welche dazu ausgebildet ist, über Fahrantrieb-Steuersignale den Werkzeugträger bis in eine Arbeitsposition zu fahren, in der das Werkzeug der jeweils anzuziehenden Schraubverbindung gegenüberliegt, und über Werkzeug-Steuersignale das Anziehen der Schraubverbindung und Drehen der Mutter durchzuführen.

Eine Vorrichtung mit diesen Merkmalen ist aus der EP 2 607 685 B1 bekannt. Sie dient dazu, in einer Reihe entlang eines Flansches angeordnete Schraubverbindungen festzuziehen. Jede Schraubverbindung setzt sich aus einem Gewindeelement und einer darauf aufgeschraubten Mutter zusammen, wobei die Mutter gegen die Oberseite des Flansches abgestützt ist. Zum Anziehen der Schraubverbindung und Drehen der Mutter relativ zu dem Flansch dient ein auf einem selbstfahrenden Fahrzeug angeordnetes Werkzeug. Um das Werkzeug oberhalb der jeweils anzuziehenden Schraubverbindung zu positionieren, verfügt das Fahrzeug über einen Positionssensor. Aufgrund der durch den Sensor erfassten Positionssignale wird das Fahrzeug mit dem darauf angeordneten Werkzeug so kontrolliert gefahren, bis sich aus den Signalen ergibt, dass sich das Werkzeug in axialer Ausrichtung zur Verschraubungsachse der jeweils anzuziehenden Schraubverbindung befindet. Hierzu werden die Positionssignale des Positionssensors steuerungstechnisch zu Signalen für den Antrieb des Fahrzeugs verarbeitet. Die Steuerung ist außerdem dazu ausgebildet, den Anziehvorgang zu steuern.

Das Positionieren des Fahrzeugs unter Auswertung der Signale des Positionssensors ist steuerungstechnisch wegen der notwendigen Genauigkeit aufwendig. Zudem kann es passieren, dass der Positionssensor, wenn dieser z.B. für das Sensieren nach oben von der Oberseite des Flansches vorstehender Strukturen ausgebildet ist, sich durch Gegenstände irritieren lässt, die nicht Bestandteil der Schraubverbindungen sind. Erforderlich ist also eine sehr gute, damit aber auch teure Sensiertechnik.

Der Erfindung liegt daher die Aufgabe zugrunde, durch technische Maßnahmen das Bewegen des mittels eines gesteuerten Fahrantriebs entlang der Flanschverbindung fahrbaren Werkzeugs bis in die nächste Arbeitsposition technisch weniger aufwendig und trotzdem sicher durchzuführen.

Zur Lösung dieser Aufgabe wird bei einer Vorrichtung mit den eingangs angegebenen Merkmalen vorgeschlagen, dass die Steuereinheit zum Anfahren der jeweiligen Arbeitsposition des Werkzeugträgers ein Wegsteuermodul mit einer Wegsteuerung umfasst, welche dazu ausgebildet ist, nach Erreichen einer vorgegebenen Weglänge als Zielgröße den Fahrantrieb anzuhalten. Die als ein Modul der Steuereinheit implementierte Wegsteuerung ist dazu ausgebildet, nach Erreichen einer in der Steuereinheit vorgegebenen Weggröße als Soll- bzw. Zielgröße den Fahrantrieb anzuhalten, und so die Fahrt des Werkzeugträgers zu unterbrechen.

Mit einer solchen Vorrichtung lässt sich die jeweils nächste Arbeitsposition auch ohne die Auswertung von Positionssignalen eines Positionssensors zuverlässig anfahren. Denn ein solcher Sensor arbeitet zuverlässig nur dann, wenn er in der Lage ist, Merkmale oder Strukturen, die für die anzufahrende Schraubverbindung charakteristisch sind, sicher und zuverlässig zu detektieren. Dies fehlerfrei zu erreichen, erfordert einen hohen technischen Aufwand in der verwendeten Sensierelektronik und bei der Umrechnung in Fahrsignale. Diese Art der Positionsbestimmung ist auch nicht immer fehlerfrei, da Strukturen, die nicht zu der Schraubverbindung gehören, das Sensorsignal beeinflussen können mit der Gefahr, dass die als nächstes anzuziehende Schraubverbindung nicht sicher gefunden wird.

Die beschriebene Vorrichtung erfordert diese Art der Sensierung nicht. Stattdessen macht sich die Erfindung die Erkenntnis zunutze, dass bei ringförmigen Flanschverbindungen, wie sie typisch sind für die Verschraubung von Turmabschnitten einer Windkraftanlage, die Positionen der Schraubverbindungen konstruktionsseitig festgelegt und damit bekannt sind. Unter Verwendung der Konstruktionsdaten lässt sich daher mit hoher Genauigkeit zumindest die relative Anordnung der Schraubverbindungen zueinander bestimmen. Denn in der Regel haben die Schraubverbindungen einen stets gleichbleibenden Abstand, also Umfangsabstand, zueinander. Ist erst einmal die Position einer ersten anzuziehenden Schraubverbindung sicher gefunden, lassen sich die Positionen aller übrigen Schraubverbindungen aufgrund geometrischer Zusammenhänge errechnen, und damit insbesondere die in Umfangsrichtung des Flansches zurückzulegenden Weglängen, d.h. Distanzen.

Das Anfahren der nächsten Schraubverbindung, die entweder die benachbarte Schraubverbindung sein kann oder jede andere Schraubverbindung der Flanschverbindung, erfolgt daher nicht sensorgesteuert, sondern unter Anwendung eines Fahrzeug-Steuerungsverfahrens mit Weglängen bzw. Distanzen als Sollwertvorgabe. Dazu umfasst die Steuereinheit ein Wegsteuermodul mit internen Wegstrecken- bzw. Distanzvorgaben, wobei das in dem Wegsteuermodul implementierte Fahrzeug-Steuerungsverfahren dazu ausgebildet ist, nach Erreichen der Weg- bzw. Distanzvorgabe als Zielgröße den Fahrantrieb zu stoppen, so dass an der zu diesem Zeitpunkt erreichten Arbeitsposition der Verschraubungsprozess eingeleitet werden kann, was ebenfalls abhängig von Signalen der Steuereinheit erfolgt.

Da die Erfindung auf einem Steuerungsverfahren mit Wegsteuerung und unter Ausnutzen der bekannten geometrischen Positionen der Verschraubungsachsen aller Schraubverbindungen aufbaut, ist in dem Wegsteuermodul frei programmierbar, in welcher Reihenfolge die Schraubverbindungen angezogen werden. Denn nicht immer ist es von Vorteil, als nächstes die jeweils benachbarte Schraubverbindung anzuziehen. Es kann auch von Vorteil sein, nach dem Anziehen einer Mutter als nächstes zum Beispiel die Mutter einer in Bezug auf das Zentrum der Flanschverbindung gegenüberliegenden Schraubverbindung anzuziehen, und so weiter.

Vorteilhafte, aber nicht obligatorische Ausgestaltungen der Vorrichtung sind in den Unteransprüchen angegeben.

So ist mit einer Ausgestaltung vorgesehen, dass der Werkzeugträger zu seiner Abstützung auf der Oberseite der Flanschverbindung mit Rollen versehen ist, die auf horizontalen Drehachsen an dem Werkzeugträger gelagert sind. Aufgabe dieser Rollen ist es vor allem, das Gewicht des Werkzeugträgers mit dem darauf angeordneten Werkzeug zu tragen.

Zusätzlich kann der Werkzeugträger zu seiner seitlichen Abstützung, etwa gegen die Innenwandung des Turms der Windkraftanlage, mit zusätzlichen Rollen versehen sein, die auf im Wesentlichen vertikalen Drehachsen an dem Werkzeugträger gelagert sind.

Vorzugsweise ist der Werkzeugträger zu seiner seitlichen Führung mit starr angebrachten Ausrichtelementen versehen, an denen eine in Fahrtrichtung sich erstreckende Ausrichtfläche ausgebildet ist, deren Flächennormale entgegengesetzt ist zu der Richtung, in die sich der Werkzeugträger über die zusätzlichen Rollen abstützt, also über die gegen die vertikale Innenwandung abgestützten Rollen. Die Ausrichtflächen befinden sich in einer Ebene, in der sie sich an den Rückseiten der freiliegenden Gewindeendabschnitte der Schraubverbindungen abstützen können. Dadurch führen die Ausrichtelemente den Wagen seitlich und verhindern, dass er seine vorgesehene Fahrlinie seitlich verlässt. Mit Wirkung in die entgegengesetzte Richtung, also nach außen, sind entsprechende Ausrichtelemente bzw. Ausrichtflächen nicht erforderlich. Denn die seitliche Führung des Wagens in diese Richtung wird bereits über die zusätzlichen Rollen erzielt.

Die Rollen, also jene auf horizontalen Drehachsen und jene auf im Wesentlichen vertikalen Drehachsen gelagerten Rollen, müssen nicht alle angetrieben sein. Bevorzugt ist vielmehr eine Ausgestaltung, bei der die Rollen nur zum Teil, zum Beispiel nur eine einzige Rolle, angetriebene Rollen sind. Die übrigen Rollen sind dann nicht angetriebene, mitlaufende Rollen.

Von Vorteil ist, wenn eine Rolle, die besonders viel Gewicht trägt, eine angetriebene Rollen ist. Daher wird mit einer Ausgestaltung vorgeschlagen, dass jede angetriebene Rolle eine jener Rollen ist, die auf horizontalen Drehachsen gelagert sind.

Um das Zentrieren des Werkzeugs in Bezug auf die Verschraubungsachse der jeweiligen Schraubverbindung zu vereinfachen, wird mit einer weiteren Ausgestaltung eine Kupplung, vorzugsweise eine elektromagnetische Kupplung, zwischen der oder jeder angetriebenen Rolle und einem Antriebsmotor des Fahrantriebs, welcher diese Rolle antreibt, vorgeschlagen. Wird die Kupplung getrennt bzw. ausgeschaltet, werden dadurch auch diese Rollen des Fahrzeugs frei drehbar, so dass sich das Fahrzeug in Fahrtrichtung frei und reibungsarm bewegen kann und das so entstehende Spiel die Zentrierung des Werkzeugs auf der Verschraubungsachse der jeweiligen Schraubverbindung einfacher macht.

In Bezug auf die genannte Kupplung ist die Steuereinheit vorzugsweise zusätzlich dazu ausgebildet, über Kupplungs-Schaltsignale die Kupplung ein- und/oder auszuschalten.

Um die Wegsteuerung besonders exakt und überprüfbar auszugestalten, kann mindestens eine der Rollen zwecks Drehwinkelerfassung drehfest mit einem Winkelencoder gekoppelt sein. Dieser erfasst die Drehwinkel der Rolle, woraus in der Steuereinheit die exakte, von der Rolle zurückgelegte Wegstrecke berechnet werden kann, um so zu exakten Werten bei der Wegsteuerung zum Anfahren der nächsten Schraubverbindung zu gelangen.

Da angetriebene Rollen oft mit einem gewissen Schlupf arbeiten, ist es von Vorteil, wenn die drehwinkelcodierte Rolle nicht eine angetriebene Rolle, sondern eine der nicht angetriebenen Rollen ist.

Bevorzug ist die drehwinkelcodierte Rolle eine der den Werkzeugträger seitlich abstützenden, zusätzlichen Rollen. Der Vorteil dieser Ausgestaltung liegt darin begründet, dass bei dem Turm einer Windkraftanlage die Innenwandungen in der Regel relativ glattwandig sind, so dass eine an dieser Fläche ablaufende Rolle besonders exakte und reproduzierbare Winkelwerte zeigt.

Sofern der Winkelencoder nicht auf derselben Achse angeordnet ist, auf der die Rolle an dem Fahrzeug gelagert ist, sollte der Winkelencoder über eine Kette oder einen mit entsprechender Schlupffreiheit arbeitenden Zahnriemen mit der drehwinkelcodierten Rolle gekoppelt sein. Im Übrigen ist auch der Winkelencoder mit der Wegsteuerung der Steuereinheit signaltechnisch verbunden.

Der das Fahrzeug bildende Werkzeugträger ist vorzugsweise mit einer Vertikalführung versehen, über die das Werkzeug in der Höhe verstellbar an dem Werkzeugträger gelagert ist.

Um das Zentrieren des Werkzeugs in Bezug auf die Verschraubungsachse der jeweiligen Schraubverbindung zu verbessern, sieht eine weitere Ausgestaltung eine Querführung mit Führungsrichtung quer zur Längserstreckung bzw. Fahrtrichtung des Werkzeugträgers vor. Über diese Querführung ist die Vertikalführung und/oder das Werkzeug horizontal verschieblich an dem Werkzeugträger gelagert. Vorzugsweise ist die Querführung besonders reibungsarm gestaltet und mit einer Federanordnung versehen, welche die Vertikalführung bzw. das Werkzeug mit einer Rückstellkraft in eine mittlere Position beaufschlagt.

Ferner vorgeschlagen wird ein mit der Steuereinheit vorzugsweise in einem gemeinsamen Gehäuse zusammengefasstes Dokumentationsmodul. In diesem wird für jede angezogene Schraubverbindung ein Datensatz abgespeichert. Der Datensatz umfasst
die individuelle Kennung der jeweiligen Schraubverbindung, wobei diese Kennung z. B. durch ein Barcode-Scannen oder einen RFID Tag an der jeweiligen Schraubverbindung erfasst wird, oder die Kennung alternativ durch die Position der jeweiligen Schraubverbindung an der Flanschverbindung bestimmt wird,
und/oder die tatsächlich verwendete Anzugskraft des Werkzeugs,
und/oder den zurückgelegten Drehwinkel der Mutter relativ zu der Flanschverbindung,
und/oder die gemessene Längenänderung des Gewindeelements während des Anziehvorgangs.

Das in der Vorrichtung verwendete Werkzeug kann z. B. ein elektrisch oder hydraulisch angetriebenes, mit einem hohem Antriebsmoment arbeitendes Schraubwerkzeug sein. Bevorzugt wird jedoch ein weitgehend torsionsfrei arbeitendes Verfahren zum Anziehen der Schraubverbindungen. Ein solches Anziehen wird ermöglicht, wenn das Werkzeug ein bezüglich der jeweiligen Schraubverbindung axial arbeitender Schraubenspannzylinder ist.

Solche Schraubenspannzylinder sind bekannt. Sie arbeiten üblicherweise mit Hydraulikkraft, sind mit einem einen hydraulischen Arbeitsraum umgebenden Zylindergehäuse versehen sowie einer in dem Zylindergehäuse drehbar angeordneten Wechselbuchse, welche mit einem Gewindeendabschnitt der Schraubverbindung verschraubbar ist. Bestandteil eines solchen Schraubenspannzylinders ist ferner eine Drehhülse zum formschlüssigen Mitnehmen, d.h. Drehen der Mutter, während das Gewindeelement der Schraubverbindung durch den Hydraulikdruck leicht gedehnt ist.

Im Fall der Verwendung eines Schraubenspannzylinders als Werkzeug ist dieser mit einem elektrischen Antrieb für das Drehen der Wechselbuchse versehen. Außerdem kann der Schraubenspannzylinder mit einem zweiten elektrischen Antrieb versehen sein. Dieser ist für das Drehen der Drehhülse und damit das Anlegen der Mutter verantwortlich, und ist zusätzlich auch für ein vertikales Einstellen des Schraubenspannzylinders relativ zu dem Werkzeugträger ausgebildet.

Aufgrund der hohen Anzahl Verschraubungen und der erforderlichen Drücke von bis zu 300 bar ist es für die Zuverlässigkeit der Nebenaggregate erforderlich, diese entsprechend haltbar und stabil auszuführen, woraus ein hohes Gewicht resultiert.

Daher ist es für die Exaktheit der Wegsteuerung von zusätzlichem Vorteil, wenn diese Nebenaggregate der Vorrichtung, z. B. ein Energiemodul, nicht auf dem Werkzeugträger angeordnet sind, sondern räumlich getrennt von diesem. Eine Ausgestaltung der Vorrichtung ist daher gekennzeichnet durch eine von einer Hydraulikpumpe zu dem hydraulischen Arbeitsraum des Schraubenspannzylinders führende Hydraulikleitung. Die Hydraulikpumpe ist getrennt von dem Schraubenspannzylinder und dem Fahrzeug, auf dem der Schraubenspannzylinder angeordnet ist, an einem Ort stationär angeordnet und ist Bestandteil eines Energiemoduls.

Gemäß einer weiteren Ausgestaltung der Vorrichtung ist die Steuereinheit an dem Energiemodul angeordnet und zum Beispiel mit diesem gemeinsam auf einem Träger angeordnet. Zu der Übertragung der Fahrantrieb-Steuersignale und der Werkzeug-Steuersignale führt eine elektrische Signalleitung von der Steuereinheit zu dem Werkzeugträger, wobei die Signalleitung zumindest auf einer Teillänge mit der Energieversorgungsleitung mechanisch verbunden sein kann.

Ferner vorgeschlagen wird ein schwenkbewegliches Gestell mit einer oder mehreren senkrechten Schwenkachsen, wobei das Gestell zu seiner Befestigung mit Befestigungsmitteln versehen ist, und ein Längsabschnitt der Energieversorgungsleitung in das Gestell eingehängt ist.

Vorzugsweise ist das schwenkbewegliche Gestell ausgebildet, die Energieversorgungsleitung über einen Drehwinkel von annähernd 360° zu stützen.

Vorzugsweise weist der Werkzeugträger eine Hindurchführung für die Energieversorgungsleitung auf, wobei sich die Hindurchführung an einem Schieber befindet, welches beweglich an dem Werkzeugträger angeordnet ist, vorzugsweise in Fahrtrichtung des Werkzeugträgers beweglich.

Weitere Einzelheiten und Vorteile ergeben sich aus der nachfolgenden Beschreibung eines auf der Zeichnung dargestellten Ausführungsbeispiels. Darin zeigen:
- Figur 1:: ein perspektivischer Blick in zwei miteinander verbundene, ringförmige Abschnitte des Turms einer Windkraftanlage, wobei die Abschnitte nur als Hälfte auf jener Länge des Turms wiedergegeben sind, auf dem sie über eine ringförmige Flanschverbindung mit einer Vielzahl von Schraubverbindungen verbunden sind;
- Figur 2:: einen horizontalen Schnitt, hier mit Darstellung des vollen Umfangs der ringförmigen Turmabschnitte;

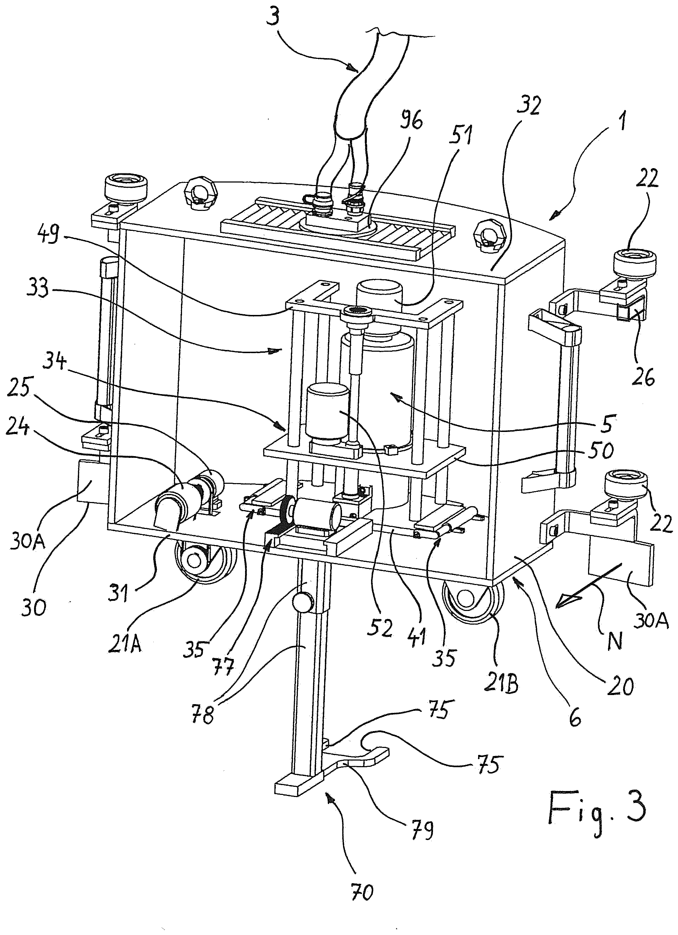

- Figur 3:: eine als Wagen ausgebildete verfahrbare Einheit der Vorrichtung zum Anziehen von Schraubverbindungen in perspektivischer Darstellung;

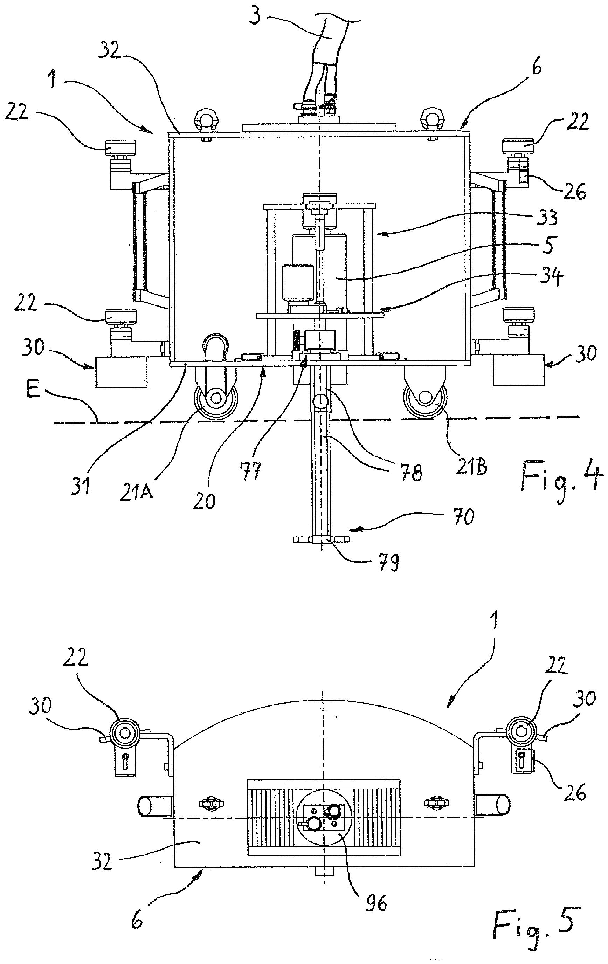

- Figur 4:: die verfahrbare Einheit in einer Ansicht;
- Figur 5:: die verfahrbare Einheit in einer Draufsicht;

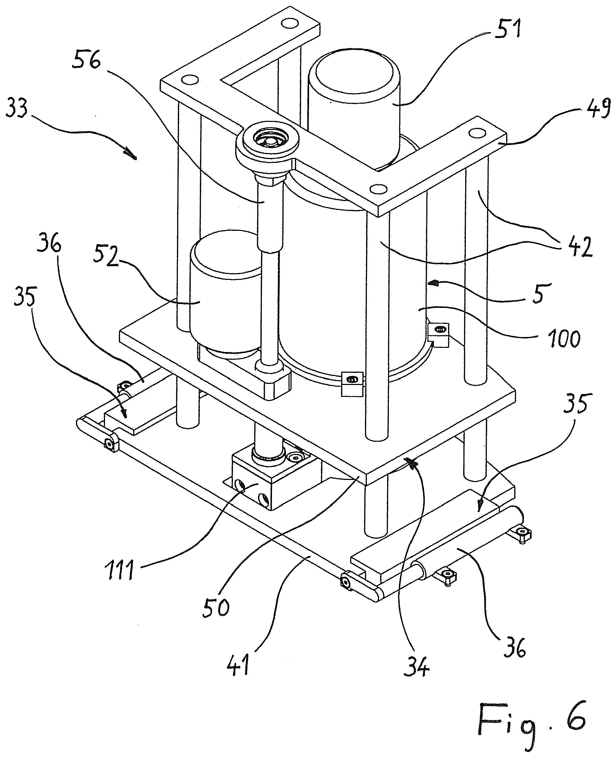

- Figur 6:: in einer Einzeldarstellung ein in der verfahrbaren Einheit angeordnetes Gestell einschließlich einem darin angeordneten Werkzeug;
- Figur 7:: das Gestell in einer Ansicht;

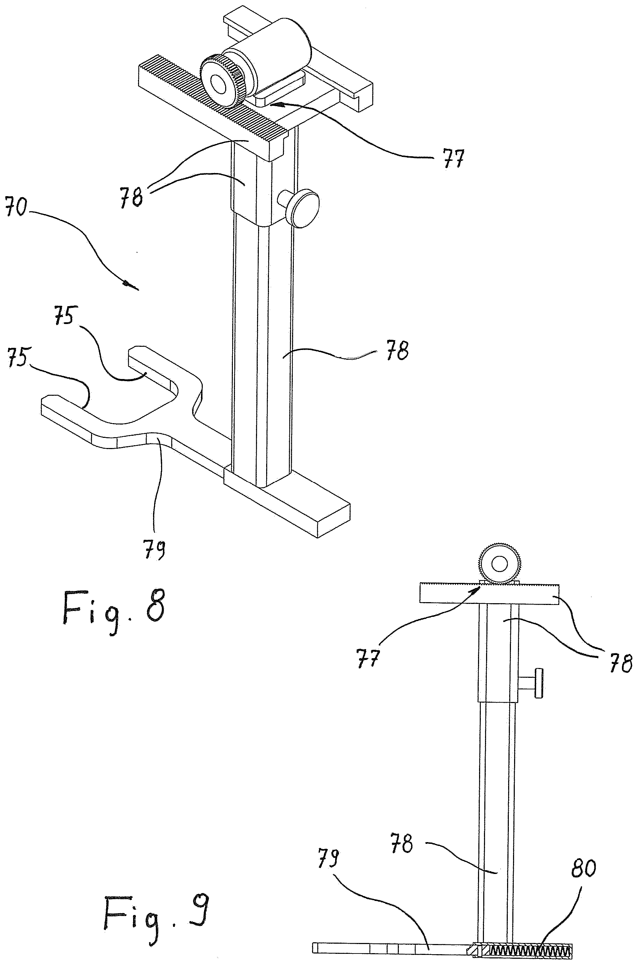

- Figur 8:: in einer Einzeldarstellung ein Haltewerkzeug, an dessen unterem Ende ein Werkzeug zum Gegenhalten beim Anziehen der Schraubverbindung angeordnet ist;
- Figur 9:: das Haltewerkzeug in einer Ansicht;
- Figur 10:: an einem Teilschnitt ein hydraulisches Werkzeug zum Anziehen von Schraubverbindungen, wobei das Werkzeug in einer Stellung wiedergegeben ist, in der es bis auf die Oberseite der Flanschverbindung abgesenkt ist und auf dieser aufsitzt, und
- Figur 11:: den unteren Teil des hydraulischen Werkzeugs in einer Ausführungsform, bei der das Haltewerkzeug mit dem Werkzeug kombiniert ist.

Die Vorrichtung zum Anziehen von Schraubverbindungen setzt sich zusammen aus einer verfahrbaren Einheit 1, einer räumlich getrennt angeordneten stationären Einheit 2 und einem Leitungsstrang, insbesondere einem Versorgungs- und Signalstrang 3, zwischen der verfahrbaren Einheit 1 und der stationären Einheit 2. Bestandteil der verfahrbaren Einheit 1 ist ein Werkzeug 5 zum Anziehen von Schraubverbindungen. Das Werkzeug ist bei dem hier näher beschriebenen Ausführungsbeispiel ein hydraulisch betriebener Schraubenspannzylinder 5. In der stationären Einheit 2 befindet sich die Energieversorgung der Vorrichtung. Ferner ist Bestandteil der stationären Einheit 2 eine elektronische Steuereinheit 4, die wiederum unter anderem ein Wegsteuermodul 4A und ein Dokumentationsmodul 4B umfasst. In dem Dokumentationsmodul 4B wird für jede einzelne angezogene Schraubverbindung ein Datensatz abgespeichert, der so eine spätere Überprüfung der wichtigsten Kenndaten des Verschraubungsprozesses ermöglicht.

Das Werkzeug 5 ist höheneinstellbar auf einem mittels eines Antriebs verfahrbaren Wagen 6 angeordnet. Der Wagen 6 ist daher der Werkzeugträger der Vorrichtung.

Der Wagen bzw. Werkzeugträger ist mittels daran gelagerter Laufrollen dafür eingerichtet, an einer ringförmigen Flanschverbindung 7 entlang, welche Bestandteil einer turmförmigen Windkraftanlage ist, in verschiedene Umfangspositionen zu fahren, um an jeder dieser Positionen eine dortige Schraubverbindung anzuziehen, nachzuziehen oder auch zu lösen.

Die Flanschverbindung 7 ist hier ein Doppelflansch aus einem oberen Ringflansch 7A und einem vorzugsweise flächig daran anliegenden unteren Ringflansch 7B. Der obere Ringflansch 7A befindet sich am unteren Rand eines oberen ringförmigen Turmabschnitts 8A. Der untere Ringflansch 7B befindet sich am oberen Rand eines unteren Turmabschnitts 8B. Die Turmabschnitte 8A, 8B bilden, gemeinsam mit weiteren, ähnlichen Turmabschnitten, den vertikalen Turm einer Windkraftanlage. Solche Windkraftanlagen mit Höhen bis zu 150 m bestehen aus montagetechnischen Gründen aus Turmabschnitten. Diese sind im Wesentlichen zylindrisch und umschließen einen kreisförmigen, von der Flanschverbindung 7 umgebenen Raum 9. Die Turmabschnitte können sich nach oben hin konisch verjüngen.

Die Turmabschnitte sind miteinander verschraubt, indem an dem jeweils oberen Turmabschnitt 8A der Ringflansch 7A, und an dem jeweils unmittelbar darunter angeordneten Turmabschnitt 8B der Ringflansch 7B angeformt ist. Die so aus zwei Ringflanschen bestehende Flanschverbindung 7 wird durch eine Vielzahl von Schraubverbindungen zusammengehalten. Diese sind in jeweils gleichen Abständen über den Umfang verteilt angeordnet.

Jede Schraubverbindung 10 besteht aus einem bolzenartigen Gewindeelement 11 und einer auf den Gewindeabschnitt des Gewindeelements 11 aufgeschraubten Gewindemutter 12. Die Gewindemutter 12 stützt sich mit ihrer Unterseite auf der vorzugsweise flachen Oberseite des Ringflanschs 7A ab.

Das Gewindeelement 11 ist beim Ausführungsbeispiel in der Weise ausgebildet, dass es sich wie eine Schraube mit einem radial erweiterten Bund oder Kopf von unten her gegen den unteren Ringflansch 7B der Flanschverbindung 7 abstützt.

Zwischen der Gewindemutter 12 und dem oberen Ringflansch 7A kann sich, wie bei Schraubverbindungen üblich, zusätzlich eine Unterlegscheibe befinden.

Die Schraubverbindungen 10 sind um den Raum 9 herum gleichmäßig, d.h. in gleichen Abständen entlang der Flanschverbindung 7 verteilt angeordnet. Der Umfangsabstand der Verschraubungsachse einer Schraubverbindung zu der Verschraubungsachse der unmittelbar folgenden Schraubverbindung ist also stets derselbe. Sofern daher der auf das Zentrum des Raums 9 bezogene Radius des Rings, auf dem sich die Achsen der Schraubverbindungen 10 befinden, bekannt ist und ebenso die Gesamtzahl der Schraubverbindungen, lassen sich die Distanzen in Umfangsrichtung zwischen den Achsen der Schraubverbindungen rechnerisch ermitteln. Diese geometrischen Vorgaben werden genutzt, um den Wagen 6 mit dem darauf angeordneten Werkzeug 5 entlang der Erstreckung des Flansches 7 in einzelne Arbeitspositionen zu verfahren, wobei jede Arbeitsposition dadurch gekennzeichnet ist, dass sich das Werkzeug 5 über und in Fluchtung zu der Achse der jeweils anzuziehenden Schraubverbindung 10 befindet.

Das in der Vorrichtung verwendete Werkzeug 5 kann ein hydraulischer Drehmomentschrauber, ein elektrischer Drehschrauber oder ein Schraubenspannzylinder sein.

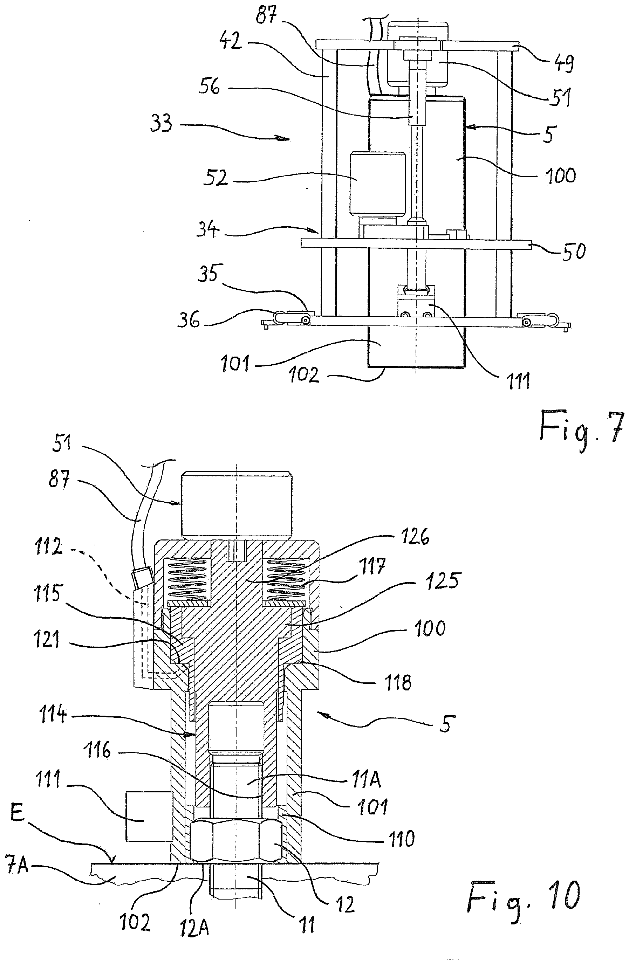

Nachfolgend anhand der Figur 10 näher beschrieben wird hierzu die Variante des Schraubenspannzylinders. Dieser zeichnet sich vor allem beim Nachziehen von Schraubverbindungen dadurch aus, dass ein weitgehend torsionsfreies Schraubenspannverfahren erreicht wird, also ohne das Auftreten größerer Torsionskräfte über der Schraubenlänge. Hierzu wird nicht unmittelbar die Mutter 12 mit hohem Anzugsmoment gedreht, sondern es wird, zum Beispiel durch hydraulische Kräfte, das Gewindeelement 11 in seiner Längsrichtung gedehnt, wodurch die Unterseite der Mutter 12 von dem Ringflansch 7A freikommt. In dem so gedehnten Zustand wird die Mutter 12 mit relativ geringem Drehmoment nachgezogen. Ein solcher Schraubenspannzylinder 5 und ein solches Schraubenspannverfahren unter Längung des Gewindeelements 11 werden später noch näher beschrieben.

Sämtliche Schraubverbindungen 10 erstrecken sich mit ihren Verschraubungsachsen rechtwinklig zur Oberseite des Ringflansches 7A und parallel zu der zentralen Hauptachse der Turmabschnitte 8A, 8B.

Grundelement der verfahrbaren Einheit 1 ist der Werkzeugträger 20. Damit dieser entlang der Flanschverbindung in einzelne Arbeitspositionen verfahren werden kann, ist der Werkzeugträger 20 mit mehreren Laufrollen versehen, die teils angetrieben sind und so den Werkzeugträger 20 vorwärtsbewegen, und die teils nicht angetrieben sind, also beim Verfahren nur mitrollen.

Bei dem hier wiedergegebenen Ausführungsbeispiel sind zwei Rollen 21A, 21B vorhanden, über die der Werkzeugträger 20 auf der Oberseite der Flanschverbindung 7 abgestützt ist. Die Rollen 21A, 21B sind auf horizontalen Drehachsen an dem Werkzeugträger 20 gelagert. Die Rolle 21A ist eine angetriebene Rolle, hingen die Rolle 21B eine frei mitlaufende Rolle. Die Rollen 21A, 21B tragen den überwiegenden Teil der Gewichtskräfte des Werkzeugträgers 20 und der darauf angeordneten Aggregate einschließlich des Werkzeugs 5. Da die Rollen 21A, 21B stark gewichtsbelastet sind, bietet es sich an, dass zumindest eine dieser Rollen, hier die Rolle 21A, die Antriebsrolle ist.

Ein elektrischer Antriebsmotor 24 treibt die Rolle 21A an und bildet mit dieser gemeinsam den Fahrantrieb der Vorrichtung. Der Antriebsmotor 24 des Fahrantriebs sitzt nicht auf derselben Welle wie die angetriebene Rolle 21A, vielmehr überträgt ein Zahnriemen oder eine Kette die Drehung des Antriebsmotors 24 in eine gleiche, übersetzte oder untersetzte Drehung der Antriebsrolle 21A. Jedoch kann, soweit genügend Platz vorhanden ist, der Antriebsmotor 24 auf derselben Welle wie die Rolle 21A angeordnet sein. Der Antriebsmotor 24 des Fahrantriebs erhält Fahrantriebs-Steuersignale von der Steuereinheit 4.

Im Antriebsweg zwischen Antriebsmotor 24 und Rolle 24A ist eine schaltbare Kupplung 25 angeordnet, vorzugsweise eine elektromagnetische Kupplung. Die Kupplung 25 erhält ihre Kupplungs-Schaltsignale ebenfalls von der elektronischen Steuereinheit 4. Wird die Kupplung 25 getrennt bzw. ausgeschaltet, wird dadurch die Rolle 24A frei drehbar, so dass sich der Werkzeugträger 20 in Fahrtrichtung frei bewegen kann und das so mögliche Spiel die Zentrierung des Werkzeugs 5 zu der Verschraubungsachse der jeweiligen Schraubverbindung 10 vereinfacht.

An dem Werkzeugträger 20 sind außerdem, allerdings auf im Wesentlichen vertikalen Drehachsen gelagert, Rollen 22 gelagert. Diese zusätzlichen Laufrollen stützen den Wagen gegen die Innenwand 23 des Turmabschnitts ab. Die Rollen 22 sind, verglichen mit den Rollen 21A, 21B, nur wenig gewichtsbelastet. Gleichwohl sind sie gegen die Innenwand 23 abgestützt, was durch eine Anordnung der Rollen 21A, 21B erreicht wird, bei der sich der Gewichtsschwerpunkt des Wagens weiter außen als die Rolllinie der Rollen 21A, 21B befindet.

Die zusätzlichen Rollen 22 sind nicht angetriebene, also nur mitlaufende Rollen. Vorzugsweise ist zumindest eine der Rollen 22 schlupffrei mit einem Winkelencoder 26 gekoppelt. Der Winkelencoder 26 ermöglicht die Sensierung von Winkelsignalen der Rolle. Aus den Winkelsignalen errechnet der Prozessor der elektronischen Steuereinheit 4 die Wegstrecke des Werkzeugträgers 20 längs der Innenwand 23. Daraus wiederum lässt sich rechnerisch mittels des Prozessors bestimmen und überprüfen, welche Distanzen der Werkzeugträger 20 längs des Rings, auf dem die Verschraubungen 10 angeordnet sind, zurücklegt oder zurückgelegt hat.

Zur Seitenführung des Wagens 6 ist unten am Werkzeugträger 20 ein vorzugsweise zweimal vorhandenes Ausrichtelement 30 befestigt. Das Ausrichtelement 30 ist mit einer sich in Fahrtrichtung erstreckenden Ausrichtfläche 30A versehen, deren Flächennormale nach innen und daher entgegengesetzt zu der Richtung weist, in die sich der Werkzeugträger über die zusätzlichen Rollen 22 abstützt. Die Ausrichtflächen 30A sind in solcher Höhe an dem Wagen 6 angeordnet, dass sie sich im Betrieb auf der Höhe der Gewindeendabschnitte 11A der Gewindeelemente 11 und oberhalb der Mutter 12 befinden. Sie befinden sich ferner geringfügig auswärts der Gewindeendabschnitte 11A, an denen sie sich abstützen können. Dies hat bei der Fahrt des Wagens 6 zur Folge, dass dieser an der Rückseite der Gewindeendabschnitte 11A abgestützt ist, so dass der Wagen 6 die durch die Rollen 21A, 21B vorgegebene Lauflinie nicht nach innen verlassen kann. In die andere Richtung, d. h. nach außen, bewirken bereits die zusätzlichen Rollen 22 die notwendige Seitenführung des Wagens.

Bestandteile des angetriebenen Werkzeugträgers 20 sind eine untere Plattform 31 und eine zu der unteren Plattform 31 fest angeordnete obere Plattform 32. Unter der unteren Plattform 31 sind die Rollen 21A, 21B abgestützt. Zum einfachen Anheben und Transportieren des kompletten Wagens 6 sind an der oberen Plattform 32 Ösen befestigt, in die sich ein Kranhaken einklinken lässt.

Auf einer Fläche an der Oberseite der unteren Plattform 31 ist ein das Werkzeug 5 aufnehmendes Gestell 33 abgestützt. Das Gestell 33 ist als eine Vertikalführung 34 zur Höhenverstellung des Werkzeugs 5 ausgebildet.

An der Oberseite der Plattform 31 einerseits und am Boden des Gestells 33 andererseits sind Elemente einer Querführung 35 mit Führungsrichtung quer zur Längsrichtung und damit Fahrtrichtung des Werkzeugträgers 20 vorhanden. Über die reibungsarm arbeitende Querführung 35 ist das Gestell 33 und damit das darin angeordnete Werkzeug 5 verschieblich auf der Plattform 31 gelagert, und zwar mit Verschiebemöglichkeit quer zur Fahrtrichtung des Werkzeugträgers.

Die Verschiebemöglichkeit des Gestells 33 relativ zu der Plattform 31 kann durch eine Federanordnung 36 ergänzt sein, welche, bei Fehlen von Querkräften, das Gestell 33 in Bezug auf die Plattform 31 in einer Mittelstellung hält. Wirken also keine Querkräfte auf das Werkzeug 5 und damit auf das Gestell 33, kehrt dieses, geführt durch die Querführung 35 und unter der Kraft der Federanordnung 36, selbsttätig in die Mittelstellung zurück.

Das Gestell 33 bildet zugleich eine Vertikalführung 34 für die Höhenverstellung des Werkzeugs 5. Hierzu setzt sich das Gestell zusammen aus der verschieblich auf der Plattform 31 aufliegenden und in der Querführung 35 geführten Gestellbasis 41, aus starr an der Gestellbasis befestigten, vertikalen Führungsstangen 42, aus einem die oberen Enden dieser Stangen verbindenden oberen Gestellrahmen 49 sowie aus einem durch Motorantrieb in der Höhe verstellbaren Gestellrahmen 50. Der auf und ab bewegliche Gestellrahmen 50 wird durch die Führungsstangen 42 der Vertikalführung 34 geführt. An dem Gestellrahmen 50 ist das Werkzeug 5 fixiert.

Für den eigentlichen Spannprozess arbeitet das Werkzeug 5 zwar hydraulisch. Für einen automatischen Werkzeugbetrieb sind jedoch auch mindestens zwei elektrische Antriebe 51, 52 vorhanden. Beide Antriebe 51, 52 arbeiten in Abhängigkeit von Werkzeug-Steuersignalen der Steuereinheit. Der erste elektrische Antrieb 51 treibt eine drehbar in dem Schraubenspannzylinder angeordnete Wechselbuchse an. Er befindet sich vorzugsweise oben auf dem Zylindergehäuse des Schraubenspannzylinders. Der zweite elektrische Antrieb 52 ist weiter unten und vorzugsweise an dem höhenverstellbaren Gestellrahmen 50 angeordnet.

Der zweite elektrische Antrieb 52 treibt eine Drehhülse an, durch welche die Gewindemutter 12 mittels Formschluss in Drehung versetzbar ist. Zusätzlich kann der zweite Antrieb 52 dafür ausgebildet sein, den Gestellrahmen 50 und damit das Werkzeug 5 gegenüber dem Gestell 33 zu heben und zu senken, was beim Ausführungsbeispiel über einen parallel zu den Führungsstangen 42 angeordneten Gewindetrieb 56 erreicht wird, mit dem die Antriebswelle des zweiten Antriebs 52 koppelbar ist.

Der zweite Antrieb 52 hat daher zwei Funktionen. Abhängig von entsprechenden Werkzeug-Steuersignalen der Steuereinheit ist er entweder mit der Drehhülse oder mit dem Gewindetrieb 56 koppelbar.

Beim Anziehen, Nachziehen oder auch Lösen der Schraubverbindungen 10 kann es prinzipiell passieren, dass die Gewindeelemente 11 ungewollt mitdrehen. Um dies während des Spannprozesses zu verhindern, ist an dem Werkzeugträger 20 außer dem Anzugswerkzeug noch ein als Gegenhalter dienendes Haltewerkzeug 70 angeordnet. Bestandteil des Haltewerkzeugs 70 ist mindestens eine Gegenhaltefläche 75, welche gegen eine Fläche an dem radial erweiterten Abschnitt des Gewindeelements 11 abstützbar ist, zum Beispiel an die Fläche eines Sechskants, mit dem das Gewindeelement 11 unterhalb der Flanschverbindung 7 versehen ist. Der dadurch bewirkte Formschluss verhindert das Mitdrehen des Gewindeelements 11 während des Anziehens, Nachziehens oder des Lösens der Schraubverbindung 10.

Um die Gegenhaltefläche 75 in Eingriff mit der Fläche an dem radial erweiterten Abschnitt des Gewindeelements 11 zu bringen, ist an der unteren Plattform 31 ein elektrischer Antrieb 77 zum Hin- und Zurückbewegen des Haltewerkzeugs 70 zwischen einer passiven Position und einer aktiven Position, der Gegenhalteposition, angeordnet. Nur in der aktiven Position gelangt die Gegenhaltefläche 75 zur Anlage an der entsprechenden Fläche und insbesondere Sechskantfläche des Gewindeelements 11. Der Prozessor der Steuereinheit 4 ist dazu ausgebildet, über Haltewerkzeug-Steuersignale den elektrischen Antrieb 77 zu steuern.

Der Werkzeugabschnitt 79 des Haltewerkzeugs 70 ist bei der dargestellten Ausführungsform nach Art eines Maulschlüssels mit zwei einander gegenüberliegend angeordneten und zueinander parallelen Gegenhalteflächen 75 gestaltet.

Der Antrieb 77 des Haltewerkzeugs 70 arbeitet hier quer zu den Achsen der Schraubverbindungen. Der Antrieb 77 zum Hin- und Zurückbewegen des Haltewerkzeugs 70 ist bei der hier beschriebenen Ausführungsform als Zahnstangenantrieb ausgebildet. Alternativ besteht die auf der Zeichnung nicht dargestellte Möglichkeit, dass der Antrieb des Haltewerkzeugs parallel zu der Achse der Schraubverbindung 10 arbeitet, also vertikal.

Das Haltewerkzeug 70 umfasst einen antriebsseitig mit dem Antrieb 77 verbundenen Werkzeuggrundkörper 78 sowie den Werkzeugabschnitt 79 mit den daran ausgebildeten Gegenhalteflächen 75. Der Werkzeugabschnitt 79 ist entgegen der Kraft einer Feder 80 beweglich an dem Werkzeuggrundkörper 78 geführt. Wird daher das Haltewerkzeug 70 gegen das Gewindeelement 11 gefahren, hält die Feder 80 den Werkzeugabschnitt 79 solange zurück, bis diese Teile eine den Formschluss ermöglichende Drehlage zueinander eingenommen haben. Denn durch Relativdrehung der beteiligten Teile ist irgendwann eine Drehlage erreicht, in der die Gegenhalteflächen 75 unter Federdruck sicher und formschlüssig einrasten können und dabei in Eingriff gelangen.

Bei unbelastetem Werkzeugabschnitt 79, also ohne Anlage oder Formschluss an dem Gewindeelement, ist der Werkzeugabschnitt 79 unter der Kraft der Feder 80 gegen einen Anschlag 81 abgestützt, der sich an dem Werkzeuggrundkörper 78 befindet.

Da die Rollen 21A, 21B eine Aufstandsebene E des Wagens bzw. des Werkzeugträgers 20 definieren, befindet sich der Antrieb 77 des Haltewerkzeugs 70 oberhalb dieser Aufstandsebene E, wobei der Antrieb vorzugsweise an der Plattform 31 befestigt ist. Von dort erstreckt sich der Werkzeuggrundkörper 78 über die Aufstandsebene E hinweg bis hinab zu dem Werkzeugabschnitt 79. Dieser befindet sich in einer Höhe unterhalb der Flanschverbindung 7.

Die Länge des Werkzeuggrundkörpers 78 und damit die Grundposition des Werkzeugabschnitts 79 ist von Hand einstellbar. Die so eingestellte Position ist mittels einer Klemmschraube gesichert.

Auch der Antrieb 77 des Haltewerkzeugs 70 wird durch Steuersignale der Steuereinheit 4 gesteuert, nämlich durch Haltewerkzeug-Steuersignale. Die Steuerung ist in der Weise, dass das Haltewerkzeug 70 frühestens dann aus seiner Ruhestellung in seine aktive Position bewegt wird, wenn der Werkzeugträger 20 eine Arbeitsposition eingenommen hat, in der die Achse des Werkzeugs 5 zu der Achse des jeweiligen Gewindeelements 11 fluchtet.

Im Praxisbetrieb der Vorrichtung wird die stationäre Einheit 2 räumlich getrennt von der verfahrbaren Einheit 1, also dem Wagen, an einem geeigneten Ort innerhalb des Raums 9 platziert. Dieser Ort kann z. B. ein Zwischenboden sein oder eine fest montierte Leiter für das Servicepersonal, welche einzelne Ebenen des Turms verbindet. Vorzugsweise aber wird die stationäre Einheit 2 möglichst zentral innerhalb des Raums 9 platziert. Daher ist es erforderlich, über den geeigneten Versorgungs- und Signalstrang 3 die Aggregate und Einrichtungen der stationären Einheit 2 mit dem Wagen 6 zu verbinden. Zu der stationären Einheit 2 gehören Beispiel ein Energiemodul 88 bzw. Energiemodule zur Energieversorgung des Fahrantriebs, des Werkzeugs 5 einschließlich aller seiner Funktionen, und des Haltewerkzeugs 70.

Auch die Steuereinheit 4 ist Bestandteil der stationären Einheit 2. Die Steuereinheit 4 ist unter anderem dazu ausgebildet, über Fahrantrieb-Steuersignale den Werkzeugträger 20 in Längsrichtung des Werkzeugträgers 20 bis in eine Arbeitsposition zu fahren, in der das Werkzeug 5 der jeweils anzuziehenden Schraubverbindung gegenüberliegt, und über Werkzeug-Steuersignale das Anziehen der Schraubverbindung und Drehen der Mutter durchzuführen.

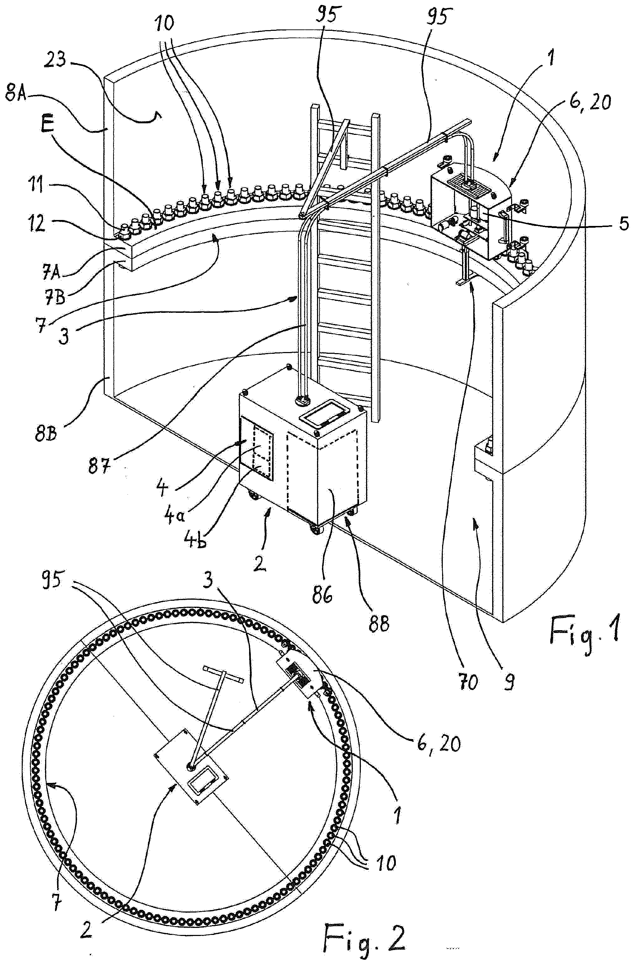

Vorzugsweise ist die Steuereinheit 4 an dem Energiemodul 88 angeordnet, oder mit diesem gemeinsam auf einem Träger angeordnet. Bei der Ausführungsform nach den Figuren 1 und 2 ist die stationäre Einheit 2 zu einer Box zusammengefasst. Laufrollen unter der Box sowie Handgriffe an der Box erleichtern deren Handhabung beim Transport.

Für die Energieversorgung führen Energieversorgungsleitungen von dem Energiemodul 88 zu dem Werkzeugträger 20. Hierzu zählen z.B. Stromkabel für die elektrische Versorgung der verschiedenen elektrischen Antriebe des Werkzeugträgers 20, des Werkzeugs 5 und des Haltewerkzeugs 70. Auch ein elektrischer Stromverteiler kann Bestandteil des Energiemoduls 88 sein.

Zu den Versorgungssträngen zählen ferner eine Hydraulikleitung 87 zur Versorgung des hydraulisch angetriebenen Werkzeugs 5. Auch die zugehörige Hydraulikpumpe 86 ist Bestandteil der stationären Einheit 2.

Zur Übertragung der Fahrantrieb-Steuersignale, der Werkzeug-Steuersignale, der Haltewerkzeug-Steuersignale und der Kupplungs-Schaltsignale besteht ferner mindestens eine Signalleitung zwischen der Steuereinheit 4 und dem Werkzeugträger 20. Die Signalverbindung kann allerdings auch kabellos bzw. drahtlos sein.

Die genannten, als Versorgungs- und Signalstrang 3 zusammengefassten Leitungen zwischen stationärer Einheit 2 und dem Wagen 6 sind, soweit möglich und zumindest auf einer Teillänge, parallel bzw. miteinander mechanisch verbunden geführt.

Für das Führen des Strangs 3 ist Bestandteil der Vorrichtung ein möglichst zentral in dem Raum 9 installiertes Schwenkgestell 95 mit einer oder mehreren senkrechten Schwenkachsen. Das Schwenkgestell 95 ist zu seiner Befestigung innerhalb des Raums 9 mit Befestigungsmitteln, z. B. anschraubbaren Haltern, versehen. Der Versorgungs- und Signalstrang 3 ist in das Schwenkgestell 95 eingehängt. Dieses ist dafür ausgebildet, den Strang 3 innerhalb des Raums 9 über einen Drehwinkel von mindestens annähernd 360° zu stützen, so dass der Strang 3 der Bewegung des Wagens 6 über den gesamten Umfang des Flansches folgen kann.

Damit Einbauten und Hindernisse in dem Raum 9 die Bewegung des Strangs 3 über volle 360° nicht beeinträchtigen, ist an dem Werkzeugträger 20 die Möglichkeit geschaffen, den dort endenden Abschnitt des Versorgungs- und Signalstrangs 3 relativ zu dem Werkzeugträger 20 in Fahrtrichtung zu verlagern. Dazu ist der Werkzeugträger 20 an seiner oberen Plattform 32 mit einem in Fahrtrichtung des Werkzeugträgers 20 beweglichen Schieber 96 versehen. Der Schieber 96 ist mit einer Öffnung versehen, durch die hindurch der Strang 3 in das Innere des Wagens bzw. Werkzeugträgers 20 gelangt. Der Schieber 96 mit der Öffnung ist frei beweglich, so dass je nach Stellung des Schiebers der Strang 3 eher vorne oder eher hinten in das Innere des Wagens führt.

Fig. 10 zeigt den hier das Werkzeug bildenden, hydraulisch zu betreibenden Schraubenspannzylinder 5, welcher dem Anziehen, vor allem Nachziehen, und ggf. auch dem Lösen der in den Figuren 1 und 2 wiedergegebenen Schraubverbindungen 10 dient. Dargestellt ist der Schraubenspannzylinder in seiner Betriebsstellung vor dem Aufbringen von Hydraulikdruck. In dieser Stellung ist er soweit abgesenkt, dass mit sich mit seiner Unterseite 102 auf dem Ringflansch 7A abstützt.

Mit dem Schraubenspannzylinder 5 lässt sich in Bolzenlängsrichtung eine vorgegebene Vorspannkraft auf das Gewindeelement 11 aufbringen, wodurch sich das Gewindeelement 11 etwas dehnt, um währenddessen die Gewindemutter 12 der Schraubverbindung anzuziehen bzw. nachzuziehen.

Eine in einem Zylindergehäuse 100 des Schraubenspannzylinders 5 drehbar angeordnete Wechselbuchse 114 ist an ihrem einen Ende mit einem Innengewinde 116 versehen. Mit diesem Gewinde wird die Wechselbuchse 114 vor Beginn des Spannprozesses durch Drehen der Wechselbuchse 114 auf jenen freien Gewindeendabschnitt 11A des Gewindeelements 11 aufgeschraubt, der nach oben über die Mutter 12 hinausragt. Mit diesem Aufschrauben der Wechselbuchse 114 geht auch ein entsprechendes Absenken des ganzen Schraubenspannzylinders 5 bis zur Auflage der Unterseite 102 auf dem Ringflansch 7A einher, da die Wechselbuchse kein oder nur ein geringes Längsspiel relativ zu dem Zylindergehäuse 100 hat. Anschließend wird die so mit dem Gewindeelement 11 verschraubte Wechselbuchse 114 hydraulisch unter Zug gesetzt, wodurch sich die Verschraubung in Längsrichtung dehnt. Die Aufstandsfläche 12A der Gewindemutter 12 kommt dadurch frei, so dass sich die Gewindemutter 12 dann mit nur wenig Drehwiderstand drehen und auf diese Weise gegen die Unterlage, also gegen den Ringflansch 7A und ggf. gegen eine Unterlegscheibe anziehen bzw. Nachziehen lässt.

Der hydraulische Spannmechanismus befindet sich in dem druckfesten Zylindergehäuse 100. Dieses kann sich auch modulartig aus mehreren Zylinderabschnitten zusammensetzen. Die starre Fortsetzung des Zylindergehäuses 100 ist ein Stützrohr 101. Dieses ist entweder wie dargestellt selbst Teil des Zylindergehäuses 100, oder ein separates Bauteil. Das Stützrohr 101 ist zu der Schraubverbindung hin offen, umgibt dabei die Gewindemutter 12 und stützt sich mit der Unterseite 102 gegen die Oberseite des Ringflanschs 7A ab. Dieser bildet daher beim Spannprozess das Widerlager. Der Spannprozess erfolgt durch Zug der Wechselbuchse 114 an dem Gewindeendabschnitt 11A, wobei zum Nachziehen der Mutter 12 diese nach unten geschraubt wird, bis sie mit ihrer Aufstandsfläche 12A wieder fest gegen den Flansch 7A anliegt.

Das Stützrohr 101 ist mit mindestens einer Öffnung versehen, die von solcher Größe ist, dass sich durch die Öffnung hindurch die Mutter 12 drehen und damit nachziehen lässt. Dies ist natürlich nur möglich, wenn zugleich die Spannvorrichtung arbeitet, und daher die Mutter 12 nicht durch erhebliche Reibung belastet ist. Das Drehen der Gewindemutter 12 erfolgt mittels einer die Mutter umschließenden Drehhülse 110. Angetrieben wird die Drehhülse 110 durch ein Getriebe 111, welches seitlich an dem Stützrohr 101 angebracht ist und durch dessen Öffnung hindurch arbeitet.

Das Zylindergehäuse 100 ist mit einem Hydraulikanschluss 112 versehen, über den ein hydraulischer Arbeitsraum 118 im Inneren des Werkzeugs über die flexible, aber druckfeste Hydraulikleitung 87 mit einer Hydraulikpumpe 86 verbunden ist (Fig. 1). Die Hydraulikpumpe 86 ist Bestandteil der stationären Einheit 2.

Über den Hydraulikanschluss 112 gelangt unter hohem Druck stehendes Hydraulikfluid in den Arbeitsraum 118, wodurch ein längsbeweglich in dem Zylindergehäuse 100 gelagerter Kolben 115 mit Hydraulikdruck beaufschlagt wird. Durch den Aufbau von Hydraulikkraft in dem hydraulischen Arbeitsraum 118 wird der Kolben 115 hochgedrückt. Dies erfolgt entgegen der Kraft einer den Kolben 115 beaufschlagenden Feder 117. Die Feder 117 dient als Kolbenrückstellfeder und beaufschlagt den Kolben 115 unmittelbar mit einer Kraft die bestrebt ist, den Kolben in seiner Grundstellung zu halten, in der der hydraulische Arbeitsraum 118 sein kleinstes Volumen hat.

Der Kolben 115 umgibt in Ringform die Wechselbuchse 114. Der Kolben 115 ist an seinem Innenrand mit einer umlaufenden Stufe versehen, die eine Mitnehmerfläche 121 bildet, an der sich die Wechselbuchse 114 mit einem radial erweiterten Abschnitt 125 abstützt. Dadurch ist die Wechselbuchse 114 durch den Kolben 115 mitnehmbar. Ohne Druckbelastung ist die Wechselbuchse 114 gegenüber dem Kolben 115 und gegenüber dem Zylindergehäuse 100 frei drehbar.

Die Wechselbuchse 114 befindet sich ebenso wie der Kolben 115 zentral auf der Längsachse des Zylindergehäuses 100 und setzt sich aufeinanderfolgend zusammen aus einem Abschnitt mit dem Innengewinde 116, welches auf den Gewindeendabschnitt 11A des Gewindeelements 11 aufgeschraubt wird, aus dem radial erweiterten Abschnitt 125 und aus einem Antriebsabschnitt 126. Der Antriebsabschnitt 126 befindet sich an dem dem Gewindeelement 11 abgewandten Ende der Wechselbuchse 114.

An dem Antriebsabschnitt 126 greift die Welle des in Abhängigkeit von Werkzeug-Steuersignalen der Steuereinheit betriebenen elektrischen Antriebs 51 an, um die Wechselbuchse 114 zu drehen und diese entweder, vor dem Spannprozess, unter Absenken des gesamten Zylindergehäuses 100 auf den Gewindeendabschnitt 11A aufzuschrauben oder, nach dem Spannprozess, unter Anheben des gesamten Zylindergehäuses 100 wieder von dem Gewindeendabschnitt 11A abzuschrauben.

Soweit vor und nach dem Spannprozess eine weitergehende, also nicht allein durch das Drehen der Wechselbuchse 114 realisierbare Höhenverstellung des Zylindergehäuses 100 erforderlich ist, erfolgt diese zusätzliche Höhenverstellung mittels der elektrisch angetriebenen Vertikalführung 34. Auch diese arbeitet in Abhängigkeit von Steuersignalen, nämlich Werkzeug-Steuersignalen, der Steuereinheit 4.

Erst wenn die Wechselbuchse 114 auf den Gewindeendabschnitt 11A aufgeschraubt ist, wird durch die Steuereinheit 4 der hydraulische Spannprozess gestartet, indem die Hydraulikpumpe 86, aufgrund von Hydraulik-Steuersignalen der Steuereinheit 4, Hydraulikdruck aufbaut.

Auch das kontrollierte, motorgetriebene Auf- und Abschrauben der Wechselbuchse 114 erfolgt in Abhängigkeit von Werkzeug-Steuersignalen der Steuereinheit 4.

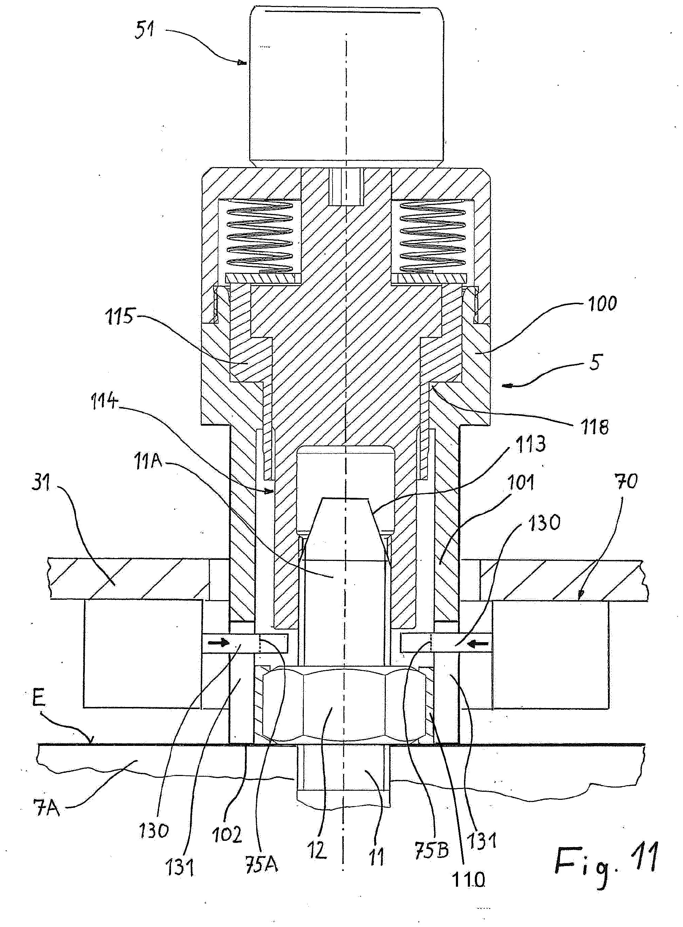

Figur 11 zeigt eine Ausführungsform, bei der das gegen Mitdrehen sichernde Haltewerkzeug 70 und das Werkzeug 5 kombiniert an dem Wagen bzw. dem Werkzeugträger angeordnet sind.

Das Haltewerkzeug 70 ist an dem Werkzeugträger 20 befestigt, hier an dessen unterer Plattform 31, und umfasst zwei aufeinander zu mit Ausrichtung auf die Verschraubungsachse bewegliche Klemmbacken 130. Deren Enden bilden hier die Gegenhalteflächen 75A, 75B, und sind hierzu als Schalen gestaltet. Der Radius der Schalen ist im Wesentlichen gleich dem Radius des Gewindeabschnitts 11A des Gewindeelements 11.

Der Antrieb der beiden Klemmbacken 130 erfolgt elektrisch, wobei wiederum die Steuereinheit 4 (Figur 1) dazu ausgebildet ist, diesen Antrieb über die Haltewerkzeug- Steuersignale zu kontrollieren. Damit bei dieser Ausführungsform die Gegenhalteflächen 75A, 75B unmittelbar auf den Gewindeabschnitt pressen, muss der Antrieb des Haltewerkzeugs 70 relativ hohe Druckkräfte erzeugen. Um hier zusätzlich den Reibungswiderstand zu erhöhen, können die Gegenhalteflächen 75A, 75B einen geeigneten Reibbelag, z.B. Gummi, oder eine geeingnete nichtglatte Oberfläche aufweisen. Z.B. kann diese Oberfläche in ihrer Struktur so auf die Außenstruktur des Gewindes abgestimmt sein, dass eine weitgehende Blockierung gegen Mitdrehen erreicht wird.

Die Klemmbacken 130 des Haltewerkzeugs 70 erstrecken sich durch Öffnungen 131 in dem Werkzeug 5, wobei sich die Gegenhalteflächen 75A, 75B innerhalb des Werkzeugs 5 befinden. Die Klemmbacken 130 sind in dem fest an dem Werkzeugträger montierten Haltewerkzeug 70 so geführt, dass sie ausschließlich, mittels des Antriebs, in ihrer Klemmrichtung beweglich sind.

Die Öffnungen 131 befinden sich in dem Stützrohr 101 des Werkzeugs 5. Sie reichen durchgehend bis zu der Unterseite 102 des Stützrohrs 101. Dadurch ist sichergestellt, dass das Werkzeug 5, wenn dieses für den Spannprozess abgesenkt wird, daran nicht durch die Bauteile des Haltewerkzeugs 70 gehindert wird. Das Werkzeug 5 und das Haltewerkzeug 70 sind zwar baulich kombiniert, ihre Funktionen sind jedoch getrennt voneinander.

Die Ausführungsform Figur 11 macht von dem Umstand Gebrauch, dass zwischen der Oberseite der Mutter 12 und jenem Gewindeendabschnitt 11A, welcher von der Wechselbuchse 114 umschlossen ist, in der Praxis oft noch ein Gewindelängsabschnitt von ca. 5 mm zur Verfügung steht. Dieser Gewindelängsabschnitt ist ausreichend, um mittels der dort zusammengefahrenen Klemmbacken 130 das Mitdrehen des Gewindeelements 11 zu unterbinden. Auch bei der Ausführungsform nach Fig. 11 kann die Steuereinheit 4 (Fig. 1) dazu ausgebildet sein, über Fahrantrieb-Steuersignale den Werkzeugträger 20 einschließlich des Schraubenspannzylinders 5 bis in eine Arbeitsposition zu fahren, in der der Schraubenspannzylinder 5 der jeweils anzuziehenden Schraubverbindung gegenüberliegt, und über Werkzeug- Steuersignale das axiale Anziehen der Schraubverbindung und das Drehen der Mutter 12 zu kontrollieren. Zusätzlich ist die Steuereinheit 4 (Fig. 1) dazu ausgebildet, über Haltewerkzeug-Steuersignale den Antrieb des Haltewerkzeugs 70 zu kontrollieren.

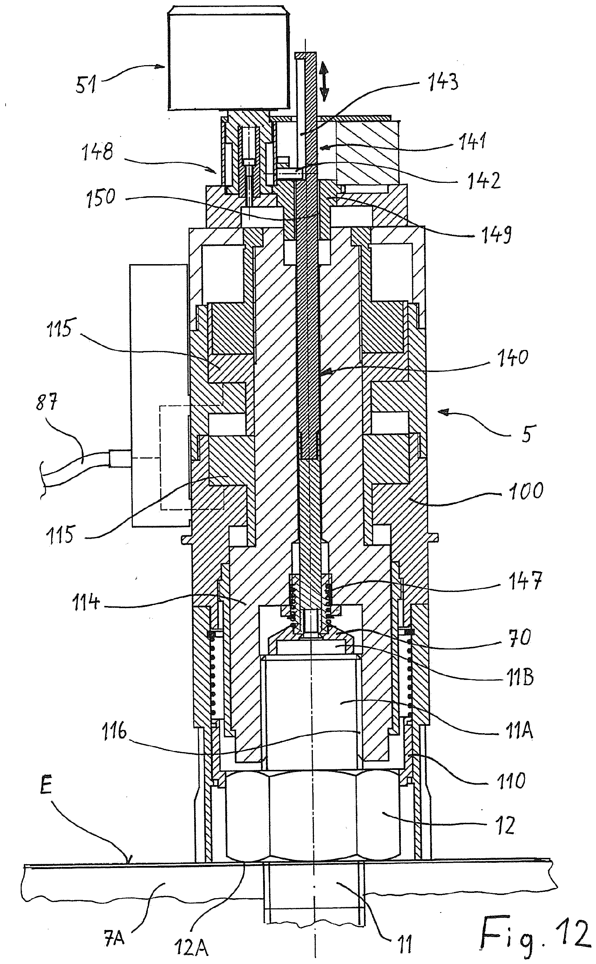

Fig. 12 zeigt eine weitere Ausführungsform. Bei dieser ist das gegen Mitdrehen sichernde Haltewerkzeug 70 zentral in dem als Schraubenspannzylinder ausgebildeten Werkzeug 5 angeordnet. Der Schraubenspannzylinder selbst entspricht in seiner Grundbauart der Ausführungsform nach Fig. 10 oder Fig. 11. Dies gilt für das Zylindergehäuse 100, für den darin geführten Kolben, welcher hier allerdings ein Doppelkolben 115 ist, für die in dem Zylindergehäuse drehbare Wechselbuchse 114 und für die drehbar in dem Zylindergehäuse angeordnete Drehhülse 110 zum Drehen der Mutter 12.

Bei Fig. 12 ist auf der Längsachse der Wechselbuchse 114 ein Stab 140 angeordnet, wozu die Wechselbuchse 114 mit einer entsprechenden Längsbohrung versehen ist. Der ein- oder mehrteilige Stab 140 ist an seinem in Fig. 12 unteren Ende mit dem Haltewerkzeug 70 versehen und ist im Bereich seines in Fig. 12 oberen Endes mit einer Verdrehsicherung 141 versehen. Die Verdrehsicherung 141 hält den Stab 140 drehfest relativ zu dem Zylindergehäuse 100. Dies wird beim Ausführungsbeispiel erreicht, indem ein gehäusefester Bolzen 142 in eine Längsnut 143 in dem Stab 140 eingreift. Die Längsnut 143 erstreckt sich axial nur über einen Teil der Länge des 140.

Die Ausführungsform Fig. 12 eignet sich für solche Schraubverbindungen, bei denen das Gewindeelement 11 an der Stirnseite seines Gewindeendabschnitts 11A zusätzlich mit einem Mehrkant 11B versehen ist. Der Mehrkant 11B ist hier ein axial vorstehender Vierkant, kann aber auch z. B. ein Sechskant oder ein versenkt in dem Gewindeendabschnitt 11A ausgebildeter Innenvierkant oder Innensechskant sein.

Das Haltewerkzeug 70 ist als korrespondierender Mehrkant gestaltet, hier also als Innenvierkant, welcher durch Formschluss mit dem Mehrkant 11B koppelbar ist. Zur Ausbildung des Haltewerkzeug 70 ist das untere Ende des Stabs 140 entsprechend vergrößert.

Das Haltewerkzeug 70 ist axial und unter dauernder Federkraft gegen den Mehrkant 11 B abgestützt. Aufgebracht wird die Federkraft durch ein Federelement 147, welches einerseits gegen das Haltewerkzeug 70 oder den Stab 140, und andererseits gegen die Wechselbuchse 114 abgestützt ist. Das Federelement 147 sorgt für eine dauernde axiale Vorspannkraft des Haltewerkzeugs 70, sodass es bereits nach kurzer Relativdrehung zu einem sicheren Eingriff des Haltewerkzeugs 70 an dem Mehrkant 11B kommt. Der hierfür erforderliche axiale Spielraum ist durch die Länge der Längsnut 143 gewährleistet.

Auch bei Fig. 12 ist Bestandteil des Werkzeugs 5 der Antrieb 51 zum Drehen der Wechselbuchse 114. Der Antrieb erfolgt allerdings nicht zentral auf der Längsachse, da sich dort der Stab 140 befindet. Der Antrieb 51 befindet sich vielmehr seitlich versetzt, wobei ein Getriebe 148 im Antriebsweg zwischen Antrieb 51 und Wechselbuchse 114 vorhanden ist. Bestandteil des Getriebes 148 ist ein zu der Wechselbuchse 114 drehfestes Zahnrad 149. Das Zahnrad 149 weist eine Durchgangsöffnung 150 auf, durch die hindurch sich der Stab 140 frei drehbar erstreckt.

Auch bei der Ausführungsform nach Fig. 12 kann die Steuereinheit 4 (Fig. 1) dazu ausgebildet sein, über Fahrantrieb-Steuersignale den Werkzeugträger 20 einschließlich des Schraubenspannzylinders 5 bis in eine Arbeitsposition zu fahren, in der der Schraubenspannzylinder 5 der jeweils anzuziehenden Schraubverbindung gegenüberliegt. Außerdem kann die Steuereinheit 4 dazu ausgebildet sein, über Werkzeug- Steuersignale das axiale Anziehen der Schraubverbindung und das Drehen der Mutter 12 zu kontrollieren.

Ferner kann auch bei der Ausführungsform nach Fig. 12 die Steuereinheit 4 (Fig. 1) dazu ausgebildet sein, über Haltewerkzeug-Steuersignale und einen entsprechenden Antrieb das Haltewerkzeug 70 zu kontrollieren, indem der Stab 140 mit dem daran starr angeordneten Haltewerkzeug 70 mittels des Antriebs gesteuert auf die Schraubverbindung abgesenkt und gesteuert wieder angehoben wird. Die Funktion des gesteuerten Absenkens und Anhebens des Haltewerkzeugs vermag aber auch das Federelement 147 durchzuführen.

### Bezugszeichenliste

- 1: verfahrbare Einheit
- 2: stationäre Einheit
- 3: Strang, Versorgungs- und Signalstrang
- 4: Steuereinheit
- 4A: Wegsteuermodul
- 4B: Dokumentationsmodul
- 5: Werkzeug, Schraubenspannzylinder
- 6: Wagen
- 7: Flanschverbindung
- 7A: Ringflansch
- 7B: Ringflansch
- 8A: Turmabschnitt
- 8B: Turmabschnitt
- 9: Raum

- 10: Schraubverbindung
- 11: Gewindeelement
- 11A: Gewindeendabschnitt
- 11B: Mehrkant
- 12: Mutter
- 12A: Aufstandsfläche der Mutter

- 20: Werkzeugträger
- 21A: Rolle, angetrieben
- 21B: Rolle
- 22: Rolle
- 23: Innenwand
- 24: Antriebsmotor
- 25: Kupplung
- 26: Winkelencoder
- 30: Ausrichtelement
- 30A: Ausrichtfläche
- 31: untere Plattform
- 32: obere Plattform
- 33: Gestell
- 34: Vertikalführung
- 35: Querführung
- 36: Federanordnung
- 41: Gestellbasis
- 42: Führungsstange
- 49: oberer Gestellrahmen
- 50: Gestellrahmen, höhenverstellbar
- 51: elektrischer Antrieb
- 52: elektrischer Antrieb
- 56: Gewindetrieb

- 70: Haltewerkzeug
- 75: Gegenhaltefläche
- 75A: Gegenhaltefläche
- 75B: Gegenhaltefläche
- 77: Antrieb
- 78: Werkzeuggrundkörper
- 79: Werkzeugabschnitt

- 80: Feder
- 86: Hydraulikpumpe
- 87: Hydraulikleitung
- 88: Energiemodul
- 95: Schwenkgestell
- 96: Schieber

- 100: Zylindergehäuse
- 101: Stützrohr
- 102: Unterseite
- 110: Drehhülse
- 111: Getriebe
- 112: Hydraulikanschluss
- 113: Konus am Bolzen
- 114: Wechselbuchse
- 115: Kolben
- 116: Innengewinde
- 117: Feder
- 118: hydraulischer Arbeitsraum

- 121: Mitnehmerfläche
- 125: radial erweiterter Abschnitt
- 126: Antriebsabschnitt

- 130: Klemmbacke
- 131: Öffnung

- 140: Stab
- 141: Verdrehsicherung
- 142: Bolzen
- 143: Längsnut
- 147: Federelement
- 148: Getriebe
- 149: Zahnrad
- 150: Durchgangsöffnung

- E: Aufstandsfläche
- N: Flächennormale

## Patentansprüche

1. Vorrichtung zum Anziehen von Schraubverbindungen, die entlang einer einen Raum und vorzugsweise das Innere des Turms einer Windkraftanlage in Ringform umgebenden Flanschverbindung (7) angeordnet sind und von denen sich jede Schraubverbindung (10) aus einem Gewindeelement (11) und einer darauf aufgeschraubten Mutter (12) zusammensetzt, und die Mutter (12) gegen die Flanschverbindung (7) abgestützt ist, wobei die Vorrichtung aufweist
- einen entlang der Flanschverbindung (7) fahrbaren, mit einem vorzugsweise elektrischen Fahrantrieb versehenen Werkzeugträger (20),
- ein an dem Werkzeugträger (20) angeordnetes Werkzeug (5) zum Anziehen der Schraubverbindung und Drehen der Mutter relativ zu der Flanschverbindung,
- eine Steuereinheit (4) welche dazu ausgebildet ist, über Fahrantrieb-Steuersignale den Werkzeugträger (20) in Längsrichtung des Werkzeugträgers (20) bis in eine Arbeitsposition zu fahren, in der das Werkzeug (5) der jeweils anzuziehenden Schraubverbindung gegenüberliegt, und über Werkzeug-Steuersignale das Anziehen der Schraubverbindung und Drehen der Mutter durchzuführen,
**dadurch gekennzeichnet, dass** die Steuereinheit (4) zum Anfahren der jeweiligen Arbeitsposition des Werkzeugträgers (20) ein Wegsteuermodul (4A) mit einer Wegsteuerung umfasst, welche dazu ausgebildet ist, nach Erreichen einer vorgegebenen Weglänge als Zielgröße den Fahrantrieb anzuhalten.

2. Vorrichtung nach Anspruch 1, **dadurch gekennzeichnet, dass** der Werkzeugträger (20) zu seiner Abstützung auf der Flanschverbindung (7) mit Rollen (21A, 21B) versehen ist, die auf horizontalen Drehachsen an dem Werkzeugträger (20) gelagert sind.

3. Vorrichtung nach Anspruch 2, **dadurch gekennzeichnet, dass** der Werkzeugträger (20) zu seiner seitlichen Abstützung mit zusätzlichen Rollen (22) versehen ist, die auf im Wesentlichen vertikalen Drehachsen an dem Werkzeugträger (20) gelagert sind.

4. Vorrichtung nach Anspruch 3, **dadurch gekennzeichnet, dass** der Werkzeugträger (20) zu seiner seitlichen Führung mit starr angebrachten Ausrichtelementen (30) versehen ist, an denen eine in Fahrtrichtung sich erstreckende Ausrichtfläche (30A) ausgebildet ist, deren Flächennormale (N) entgegengesetzt ist zu der Richtung, in die sich der Werkzeugträger (20) über die zusätzlichen Rollen (22) abstützt.

5. Vorrichtung nach Anspruch 2, 3 oder 4, **dadurch gekennzeichnet, dass** die Rollen (21A, 21B, 22) zum Teil angetriebene Rollen des Fahrantriebs, und zum Teil nicht angetriebene Rollen sind.

6. Vorrichtung nach Anspruch 5, **dadurch gekennzeichnet, dass** jede angetriebene Rolle (21A) eine auf horizontaler Drehachse gelagerte Rolle ist.

7. Vorrichtung nach Anspruch 5 oder 6, **gekennzeichnet durch** eine Kupplung (25), vorzugsweise eine elektromagnetische Kupplung, zwischen jeder angetriebenen Rolle (21A) und einem Antriebsmotor (24) des Fahrantriebs.

8. Vorrichtung nach Anspruch 7, **dadurch gekennzeichnet, dass** die Steuereinheit (4) außerdem dazu ausgebildet ist, über Kupplungs-Schaltsignale die Kupplung (25) ein- und/oder auszuschalten.

9. Vorrichtung nach einem der Ansprüche 2 bis 8, **dadurch gekennzeichnet, dass** mindestens eine Rolle (21A, 21B, 22) zu ihrer Drehwinkelcodierung schlupffrei mit einem Winkelencoder (26) gekoppelt ist.

10. Vorrichtung nach Anspruch 9, **dadurch gekennzeichnet, dass** die drehwinkelcodierte Rolle eine der nicht angetriebenen Rollen ist.

11. Vorrichtung nach Anspruch 9 oder 10, **dadurch gekennzeichnet, dass** die drehwinkelcodierte Rolle eine der den Werkzeugträger (20) seitlich abstützenden, zusätzlichen Rollen (22) ist.

12. Vorrichtung nach einem der Ansprüche 9 bis 11, **dadurch gekennzeichnet, dass** der Winkelencoder (26) über eine Kette oder einen Zahnriemen mit der drehwinkelcodierten Rolle gekoppelt ist.

13. Vorrichtung nach einem der Ansprüche 9 bis 12, **dadurch gekennzeichnet, dass** der Winkelencoder (26) mit dem Wegsteuermodul (4A) der Steuereinheit (4) signaltechnisch verbunden ist.

14. Vorrichtung nach einem der vorangehenden Ansprüche, **gekennzeichnet durch** eine Vertikalführung (34), über die das Werkzeug (5) in der Höhe verstellbar an dem Werkzeugträger (20) gelagert ist.

15. Vorrichtung nach einem der vorangehenden Ansprüche, **gekennzeichnet durch** eine Querführung (35) mit Führungsrichtung quer zur Längsrichtung des Werkzeugträgers (20), über welche die Vertikalführung (34) und/oder das Werkzeug (5) verschieblich an dem Werkzeugträger (20) gelagert ist.

16. Vorrichtung nach einem der vorangehenden Ansprüche, **dadurch gekennzeichnet, dass** die Querführung (35) mit einer Federanordnung (36) versehen ist, welche die Vertikalführung (34) bzw. das Werkzeug (5) mit einer Rückstellkraft in eine mittlere Position beaufschlagt.

17. Vorrichtung nach einem der vorangehenden Ansprüche, **gekennzeichnet durch** ein vorzugsweise mit der Steuereinheit in einem gemeinsamen Gehäuse zusammengefasstes Dokumentationsmodul (4B), in welchem für jede angezogene Schraubverbindung ein Datensatz abgespeichert ist, der umfasst
- eine individuelle Kennung der jeweiligen Schraubverbindung (10) und/oder die Position der jeweiligen Schraubverbindung (10) an der Flanschverbindung (7)
- und/oder die verwendete Anzugskraft des Werkzeugs (5),
- und/oder den zurückgelegten Drehwinkel der Mutter (12) relativ zu der Flanschverbindung (7).

18. Vorrichtung nach einem der vorangehenden Ansprüche, **dadurch gekennzeichnet, dass** das Werkzeug ein bezüglich der jeweiligen Schraubverbindung axial arbeitender Schraubenspannzylinder (5) ist, mit einem einen hydraulischen Arbeitsraum (118) umgebenden Zylindergehäuse (100), einer in dem Zylindergehäuse (100) mittels eines elektrischen Antriebs (51) drehbaren Wechselbuchse (114) und einer durch Formschluss mit der Mutter (12) in Eingriff bringbaren Drehhülse (101).

19. Vorrichtung nach Anspruch 18, **dadurch gekennzeichnet, dass** der Schraubenspannzylinder (5) mit einem zweiten elektrischen Antrieb (52) für die Drehhülse (110) versehen ist, welcher zusätzlich für ein vertikales Einstellen des Schraubenspannzylinders (5) relativ zu dem Werkzeugträger (20) ausgebildet ist.

20. Vorrichtung nach einem der Ansprüche 18 oder 19, **gekennzeichnet durch** eine räumlich getrennt von dem Werkzeugträger (20) platzierbare Hydraulikpumpe (86) und eine von der Hydraulikpumpe (86) zu dem hydraulischen Arbeitsraum (118) des Schraubenspannzylinders (5) führende, zumindest auf einer Teillänge flexible Hydraulikleitung (87).

21. Vorrichtung nach einem der vorangehenden Ansprüche, **gekennzeichnet durch** ein räumlich getrennt von dem Werkzeugträger (20) platzierbares Energiemodul (88) zur Energieversorgung des Fahrantriebs und des Werkzeugs (5), wobei eine zumindest auf einer Teillänge flexible Energieversorgungsleitung von dem Energiemodul (88) zu dem Werkzeugträger (20) führt.

22. Vorrichtung nach Anspruch 21, **dadurch gekennzeichnet, dass** die Steuereinheit (4) an dem Energiemodul (88) angeordnet oder mit diesem gemeinsam auf einem Träger angeordnet ist, dass zur Übertragung der Fahrantrieb-Steuersignale und der Werkzeug-Steuersignale eine elektrische Signalleitung von der Steuereinheit (4) zu dem Werkzeugträger (20) führt, und dass die Signalleitung zumindest auf einer Teillänge mit der Energieversorgungsleitung mechanisch verbunden ist.

23. Vorrichtung nach einem der Ansprüche 20 bis 22, **dadurch gekennzeichnet, dass** diese ferner ein schwenkbewegliches Gestell (95) mit einer oder mehreren senkrechten Schwenkachsen aufweist, dass das Gestell (95) zu seiner Befestigung mit Befestigungsmitteln versehen ist, und dass ein Längsabschnitt der Hydraulikleitung (87) oder der Energieversorgungsleitung in das Gestell (95) eingehängt ist.

24. Vorrichtung nach Anspruch 23, **dadurch gekennzeichnet, dass** das schwenkbewegliche Gestell (95) ausgebildet ist, die Hydraulikleitung (87) oder die Energieversorgungsleitung über einen Drehwinkel von annähernd 360° zu stützen.

25. Vorrichtung nach einem der Ansprüche 20 bis 24, **dadurch gekennzeichnet, dass** der Werkzeugträger (20) eine Hindurchführung für die Hydraulikleitung (87) oder die Energieversorgungsleitung aufweist und sich die Hindurchführung an einem Schieber (96) befindet, welcher beweglich an dem Werkzeugträger (20) angeordnet ist, vorzugsweise in Fahrtrichtung des Werkzeugträgers (20) beweglich.

## Claims

1. Device for tightening screw joints which are arranged along a flange connection (7) which surrounds, in an annular shape, a space and preferably the interior of the tower of a wind turbine, and each screw connection (10) of which is composed of a thread element (11) and a nut (12) which is screwed thereon, and the nut (12) is supported against the flange connection (7), wherein the device has
- a tool carrier (20) which can move along the flange connection (7) and is provided with a preferably electric traction drive,
- a tool (5) which is arranged on the tool carrier (20) and has the purpose of tightening the screw connection and rotating the nut relative to the flange connection,
- a control unit (4) which is designed to move the tool carrier (20) by means of traction drive control signals, in the longitudinal direction of the tool carrier (20) as far as a working position in which the tool (5) lies opposite the screw connection which is to be respectively tightened and to carry out the tightening of the screw connection and rotation of the nut by means of tool control signals,
**characterized in that** the control unit (4) comprises, for the purpose of moving into the respective working position of the tool carrier (20), a travel control module (4A) with a travel controller which is designed to stop the traction drive after a predefined length of travel has been reached, as a target variable.

2. Device according to Claim 1, **characterized in that** the tool carrier (20) is provided, for its support on the flange connection (7), with rollers (21A, 21B) which are mounted on horizontal rotational axes on the tool carrier (20).

3. Device according to Claim 2, **characterized in that** the tool carrier (20) is provided, for its lateral support, with additional rollers (22) which are mounted on essentially vertical rotational axes on the tool carrier (20).

4. Device according to Claim 3, **characterized in that** the tool carrier (20) is provided, for its lateral guidance, with rigidly attached orientation elements (30) on which an alignment face (30A) which extends in the direction of travel is formed, the surface normal (N) of which is opposite the direction in which the tool carrier (20) is supported by means of the additional rollers (22).

5. Device according to Claim 2, 3 or 4, **characterized in that** the rollers (21A, 21B, 22) are partially driven rollers of the traction drive and partially non-driven rollers.

6. Device according to Claim 5, **characterized in that** each driven roller (21A) is a roller which is mounted on a horizontal rotational axis.

7. Device according to Claim 5 or 6, **characterized by** a clutch (25), preferably an electromagnetic clutch, between each driven roller (21A) and a drive motor (24) of the traction drive.

8. Device according to Claim 7, **characterized in that** the control unit (4) is also designed to switch the clutch (25) on and/or off by means of clutch switching signals.

9. Device according to one of Claims 2 to 8, **characterized in that** at least one roller (21A, 21B, 22) is coupled, for its rotational angle encoding, in a slip-free fashion to an angle encoder (26).

10. Device according to Claim 9, **characterized in that** the rotational-angle-encoded roller is one of the non-driven rollers.

11. Device according to Claim 9 or 10, **characterized in that** the rotational-angle-encoded roller is one of the additional rollers (22) which laterally support the tool carrier (20).

12. Device according to one of Claims 9 to 11, **characterized in that** the angle encoder (26) is coupled to the rotational-angle-encoded roller via a chain or a toothed belt.

13. Device according to one of Claims 9 to 12, **characterized in that** the angle encoder (26) is connected in a signal-transmitting fashion to the travel control module (4A) of the control unit (4).

14. Device according to one of the preceding claims, **characterized by** a vertical guide (34) by means of which the tool (5) is mounted in a vertically adjustable fashion on the tool carrier (20).

15. Device according to one of the preceding claims, **characterized by** a transverse guide (35) with a transverse guiding direction with respect to the longitudinal direction of the tool carrier (20), by means of which transverse guide (35) the vertical guide (34) and/or the tool (5) are/is displaceably mounted on the tool carrier (20).

16. Device according to one of the preceding claims, **characterized in that** the transverse guide (35) is provided with a spring arrangement (36) which applies a restoring force into a central position to the vertical guide (34) or the tool (5).

17. Device according to one of the preceding claims, **characterized by** a documentation module (4B) which is preferably combined with the control unit in a common housing and in which a data set is stored for each tightened screw connection, said data set comprising
- an individual identifier of the respective screw connection (10) and/or the position of the respective screw connection (10) on the flange connection (7)
- and/or the employed tightening force of the tool (5)
- and/or the rotational angle travelled through by the nut (12) relative to the flange connection (7) .

18. Device according to one of the preceding claims, **characterized in that** the tool is a screw-tensioning cylinder (5) which works axially in relation to the respective screw connection and has a cylinder housing (100) which surrounds a hydraulic working space (118), a replaceable bushing (114) which can be rotated in the cylinder housing (100) by means of an electric drive (51), and a rotational sleeve (101) which can be placed in engagement with the nut (12) by means of positive engagement.

19. Device according to Claim 18, **characterized in that** the tensioning cylinder (5) is provided with a second electric drive (52) for the rotational sleeve (110), which second electric drive (52) is additionally designed to vertically position the screw tensioning cylinder (5) relative to the tool carrier (20).

20. Device according to one of Claims 18 and 19, **characterized by** a hydraulic pump (86) which can be positioned spatially separate from the tool carrier (20), and a hydraulic line (87) which leads from the hydraulic pump (86) to the hydraulic working space (118) of the screw tensioning cylinder (5) and is flexible at least over part of its length.

21. Device according to one of the preceding claims, **characterized by** an energy module (88) which can be positioned spatially separate from the tool carrier (20) and has the purpose of supplying energy to the traction drive and to the tool (5), wherein an energy supply line, which is flexible at least over part of its length, leads from the energy module (88) to the tool carrier (20).

22. Device according to Claim 21, **characterized in that** the control unit (4) is arranged on the energy module (88) or is arranged together with the latter on a carrier, **in that** in order to transmit the traction drive control signals and the tool control signals an electric signal line leads from the control unit (4) to the tool carrier (20), and **in that** the signal line is mechanically connected, at least over part of its length, to the energy supply line.

23. Device according to one of Claims 20 to 22, **characterized in that** the latter also has a pivotable frame (95) with one or more perpendicular pivoting axes, **in that** the frame (95) is provided with attachment means for its attachment, and **in that** a longitudinal section of the hydraulic line (87) or of the energy supply line is coupled into the frame (95).

24. Device according to Claim 23, **characterized in that** the pivotable frame (95) is designed to support the hydraulic line (87) or the energy supply line over a rotational angle of approximately 360°.

25. Device according to one of Claims 20 to 24, **characterized in that** the tool carrier (20) has a feedthrough for the hydraulic line (87) or the energy supply line, and the feedthrough is located on a slide (96) which is movably arranged on the tool carrier (20), preferably so that it can move in the direction of travel of the tool carrier (20).

## Revendications

1. Dispositif pour serrer des assemblages vissés, qui sont disposés le long d'un assemblage par brides (7) qui entoure sous forme annulaire un espace et de préférence l'intérieur de la tour d'un aérogénérateur et dont chaque assemblage vissé (10) se compose d'un élément fileté (11) et d'un écrou (12) vissé sur celui-ci, et l'écrou (12) prenant appui contre l'assemblage par brides (7), le dispositif comprenant
- un porte-outil (20) pouvant se déplacer le long de l'assemblage par brides (7), pourvu d'un mécanisme d'entraînement de déplacement de préférence électrique,
- un outil (5) disposé sur le porte-outil (20) destiné à serrer l'assemblage vissé et à tourner l'écrou par rapport à l'assemblage par brides,
- une unité de commande (4), qui est configurée pour déplacer le porte-outil (20) par le biais de signaux de commande de mécanisme d'entraînement de déplacement dans la direction longitudinale du porte-outil (20) jusqu'à une position de travail, dans laquelle l'outil (5) se trouve respectivement en vis-à-vis de l'assemblage vissé à serrer, et effectuer le serrage de l'assemblage vissé et la rotation de l'écrou par le biais de signaux de commande d'outil,
**caractérisé en ce que** l'unité de commande (4), pour gagner la position de travail respective du porte-outil (20), possède un module de commande de course (4A) avec un contrôleur de course, lequel est configuré pour arrêter le mécanisme d'entraînement de déplacement après avoir atteint une longueur de course prédéfinie en tant que grandeur cible.

2. Dispositif selon la revendication 1, **caractérisé en ce que** le porte-outil (20) est pourvu de roulettes (21A, 21B) pour son appui contre l'assemblage par brides (7), lesquelles sont supportées sur des axes de rotation horizontaux au niveau du porte-outil (20).

3. Dispositif selon la revendication 2, **caractérisé en ce que** le porte-outil (20) est pourvu de roulettes (22) supplémentaires pour son appui latéral, lesquelles sont supportées sur des axes de rotation sensiblement verticaux au niveau du porte-outil (20).

4. Dispositif selon la revendication 3, **caractérisé en ce que** le porte-outil (20) est pourvu d'éléments d'alignement (30) montés de manière rigide, au niveau desquels est formée une surface d'alignement (30A) qui s'étend dans le sens du déplacement, dont la normale à la surface (N) est opposée à la direction dans laquelle s'appuie le porte-outil (20) par le biais des roulettes supplémentaires (22).

5. Dispositif selon la revendication 2, 3 ou 4, **caractérisé en ce que** les roulettes (21A, 21B, 22) sont en partie des roulettes motrices du mécanisme d'entraînement de déplacement et en partie des roulettes non motrices.

6. Dispositif selon la revendication 5, **caractérisé en ce que** chaque roulette motrice (21A) est une roulette supportée sur un axe de rotation horizontal.

7. Dispositif selon la revendication 5 ou 6, **caractérisé par** un accouplement (25), de préférence un accouplement électromagnétique, entre chaque roulette motrice (21A) et un moteur d'entraînement (24) du mécanisme d'entraînement de déplacement.

8. Dispositif selon la revendication 7, **caractérisé en ce que** l'unité de commande (4) est en outre configurée pour mettre l'accouplement (25) en circuit et/ou hors circuit par le biais de signaux de commutation d'accouplement.

9. Dispositif selon l'une des revendications 2 à 8, **caractérisé en ce qu'**au moins une roulette (21A, 21B, 22) est couplée sans patinage à un codeur angulaire (26) en vue du codage de son angle de rotation.

10. Dispositif selon la revendication 9, **caractérisé en ce que** la roulette dont l'angle de rotation est codé est l'une des roulettes non motrices.

11. Dispositif selon la revendication 9 ou 10, **caractérisé en ce que** la roulette dont l'angle de rotation est codé est l'une des roulettes supplémentaires (22) assurant l'appui latéral du porte-outil (20).

12. Dispositif selon l'une des revendications 9 à 11, **caractérisé en ce que** le codeur angulaire (26) est couplé à la roulette dont l'angle de rotation est codé par le biais d'une chaîne ou d'une courroie crantée.

13. Dispositif selon l'une des revendications 9 à 12, **caractérisé en ce que** le codeur angulaire (26) est relié de manière signalétique au module de commande de course (4A) de l'unité de commande (4).

14. Dispositif selon l'une des revendications précédentes, **caractérisé par** un guide vertical (34) par le biais duquel l'outil (5) est supporté au niveau du porte-outil (20) de manière à pouvoir être positionné en hauteur .

15. Dispositif selon l'une des revendications précédentes, **caractérisé par** un guide transversal (35) ayant une direction de guidage transversale par rapport à la direction longitudinale du porte-outil (20), par le biais duquel le guide vertical (34) et/ou l'outil (5) sont supportés coulissants sur le porte-outil (20).

16. Dispositif selon l'une des revendications précédentes, **caractérisé en ce que** le guide transversal (35) est pourvu d'un arrangement à ressort (36) qui soumet le guide vertical (34) ou l'outil (5) à une force de rappel dans une position centrale.

17. Dispositif selon l'une des revendications précédentes, **caractérisé par** un module de documentation (4B), de préférence regroupé avec l'unité de commande dans un boîtier commun, dans lequel un jeu de données est enregistré pour chaque assemblage vissé serré, lequel comporte
- un identificateur individuel de l'assemblage vissé (10) respectif et/ou de la position de l'assemblage vissé (10) respectif sur l'assemblage par brides (7),
- et/ou la force de serrage utilisée de l'outil (5),
- et/ou l'angle de rotation parcouru de l'écrou (12) par rapport à l'assemblage par brides (7).

18. Dispositif selon l'une des revendications précédentes, **caractérisé en ce que** l'outil est un vérin de serrage de vis (5) qui fonctionne dans le sens axial en référence à l'assemblage vissé respectif, comprenant un boîtier cylindrique (100) qui entoure un espace de travail hydraulique (118), une douille interchangeable (114) qui peut être mise en rotation dans le boîtier cylindrique (100) au moyen d'un mécanisme d'entraînement électrique (51) et une douille rotative (101) qui peut être mise en prise par complémentarité de formes avec l'écrou (12).

19. Dispositif selon la revendication 18, **caractérisé en ce que** le vérin de serrage de vis (5) est pourvu d'un deuxième mécanisme d'entraînement électrique (52) pour la douille rotative (110), lequel est en plus configuré pour un réglage vertical du vérin de serrage de vis (5) par rapport au porte-outil (20).

20. Dispositif selon l'une des revendications 18 et 19, **caractérisé par** une pompe hydraulique (86) qui peut être placée séparée spatialement du porte-outil (20) et une conduite hydraulique (87), flexible au moins sur une longueur partielle, qui mène de la pompe hydraulique (86) à l'espace de travail hydraulique (118) du vérin de serrage de vis (5).

21. Dispositif selon l'une des revendications précédentes, **caractérisé par** un module d'énergie (88) qui peut être placé séparé spatialement du porte-outil (20), destiné à l'alimentation en énergie du mécanisme d'entraînement de déplacement et de l'outil (5), une ligne d'alimentation en énergie, flexible au moins sur une longueur partielle, menant du module d'énergie (88) au porte-outil (20).

22. Dispositif selon la revendication 21, **caractérisé en ce que** l'unité de commande (4) est disposée sur le module d'énergie (88) ou disposée conjointement avec celui-ci sur un élément porteur, **en ce qu'**une ligne de signal électrique mène de l'unité de commande (4) au porte-outil (20) pour la transmission des signaux de commande de mécanisme d'entraînement de déplacement et des signaux de commande d'outil, et **en ce que** la ligne de signal est reliée mécaniquement à la ligne d'alimentation en énergie au moins sur une longueur partielle.

23. Dispositif selon l'une des revendications 20 à 22, **caractérisé en ce que** celui-ci possède en outre un bâti (95) mobile en pivotement ayant un ou plusieurs axes de pivotement verticaux, **en ce que** le bâti (95) est pourvu de moyens de fixation pour sa fixation, et **en ce qu'**une portion longitudinale de la conduite hydraulique (87) ou de la ligne d'alimentation en énergie est accrochée dans le bâti (95).

24. Dispositif selon la revendication 23, **caractérisé en ce que** le bâti (95) mobile en pivotement est configuré pour soutenir la conduite hydraulique (87) ou la ligne d'alimentation en énergie sur un angle de rotation approximatif de 360°.

25. Dispositif selon l'une des revendications 20 à 24, **caractérisé en ce que** le porte-outil (20) possède une traversée pour la conduite hydraulique (87) ou la ligne d'alimentation en énergie et la traversée se trouve au niveau d'un coulisseau (96) qui est monté mobile sur le porte-outil (20), de préférence mobile dans le sens de déplacement du porte-outil (20).
